# EUROPEAN PATENT APPLICATION

(11) **EP 4 362 424 A1**
(43) Date of publication of application: **01.05.2024**
(21) Application number: 22844836.1
(22) Date of filing: 17.02.2022
(51) Int. Cl.: H04L 67/00

(54) **MEDIA CONTENT DELIVERY METHOD AND DEVICE**

(30) Priority: 23.07.2021 CN 202110838469
(71) Applicant: Huawei Technologies Co., Ltd., Shenzhen, Guangdong 518129 (CN)
(72) Inventor: YANG, Enfeng, Shenzhen, Guangdong 518129 (CN); PENG, Yunfeng, Shenzhen, Guangdong 518129 (CN); CHANG, Lijuan, Shenzhen, Guangdong 518129 (CN); ZHANG, Renzhou, Shenzhen, Guangdong 518129 (CN)
(74) Representative: Gill Jennings & Every LLP
(86) International application number: PCT/CN2022/076629
(87) International publication number: WO 2023/000662

(57) **Abstract**

This application discloses a media content delivery method and a device, and relates to the communication field. In the method, a media delivery server may receive indication information that indicates a man-machine interaction environment of a user corresponding to user equipment (user equipment, UE) during a call service execution period and that is sent by the UE. After receiving the indication information, the media delivery server may determine, based on the indication information, whether to deliver media content to the UE during the call service execution period. Alternatively, after receiving the indication information, the media delivery server may determine to-be-delivered media content based on the indication information, and deliver the to-be-delivered media content to the UE during the call service execution period. The indication information can reflect the man-machine interaction environment of the user during the call service execution period. Therefore, based on the indication information, determining whether to deliver media content or determining the to-be-delivered media content better meets a requirement of the user, so that user experience and delivery effect of the media content can be improved.

## Description

This application claims priority to Chinese Patent Application No. 202110838469.2, filed with the China National Intellectual Property Administration on July 23, 2021 and entitled "MEDIA CONTENT DELIVERY METHOD AND DEVICE", which is incorporated herein by reference in its entirety.

### TECHNICAL FIELD

This application relates to the communication field, and in particular, to a media content delivery method and a device.

### BACKGROUND

With development of mobile communication technologies, a voice over long term evolution (voice over long term evolution, VoLTE) technology emerges. VoLTE may be borne on a 4th generation (4th generation, 4G) or 5th generation (5th generation, 5G) network, implement voice control based on an internet protocol multimedia subsystem (internet protocol multimedia subsystem, IMS), and provide user equipment (user equipment, UE) with a shorter connection establishment time for a high-definition voice.

To present rich media content, for example, advertisement or promotion information, to a user corresponding to UE, the media content may be delivered to the UE when the user has a call by using the VoLTE technology. However, when the media content is to be delivered to the UE, determining the to-be-delivered media content only based on label information of the user still has blindness to some extent. This affects user experience and delivery effect of the media content.

### SUMMARY

This application provides a media content delivery method and a device, to determine, based on a man-machine interaction environment of a user corresponding to UE during a call service execution period, whether to deliver media content to the UE during the call service execution period, or determine media content to be delivered to the UE during a call service execution period. This improves user experience and delivery effect of the media content.

To achieve the foregoing objective, the following technical solutions are used in embodiments of this application.

According to a first aspect, an embodiment of this application provides a media content delivery method. The method can be applied to a media delivery server, and the method includes: receiving call service man-machine interaction environment indication information sent by UE, where the call service man-machine interaction environment indication information indicates a man-machine interaction environment of a user corresponding to the UE during a call service execution period; and determining to-be-delivered media content based on the call service man-machine interaction environment indication information, and delivering the to-be-delivered media content to the UE during the call service execution period.

According to the foregoing method, the media delivery server may receive the call service man-machine interaction environment indication information sent by the UE, and determine the to-be-delivered media content based on the indication information. The man-machine interaction environment indicated by the call service man-machine interaction environment indication information can reflect a current status of the user, for example, whether the user gazes at a screen of the UE or whether the user is suitable for watching or listening to media content. Therefore, the to-be-delivered media content determined based on the call service man-machine interaction environment indication information better meets a requirement of the user, and the media delivery server delivers the media content that meets the requirement of the user to the user, so that user experience and delivery effect of the media content can be improved.

Alternatively, according to a first aspect, an embodiment of this application provides a media content delivery method. The method can be applied to a media delivery server, and the method includes: receiving call service man-machine interaction environment indication information sent by UE, where the call service man-machine interaction environment indication information indicates a man-machine interaction environment of a user corresponding to the UE during a call service execution period; and determining, based on the call service man-machine interaction environment indication information, not to deliver media content to the UE during the call service execution period.

According to the foregoing method, the media delivery server may determine, based on the call service man-machine interaction environment indication information, not to deliver media content to the UE during the call service execution period. The man-machine interaction environment indicated by the call service man-machine interaction environment indication information can reflect a current status of the user, for example, whether the user gazes at a screen of the UE or whether the user is suitable for watching or listening to media content. Therefore, when media content is unsuitable for being delivered to the UE, the media delivery server may not deliver media content to the UE. This can reduce or avoid consumption of data traffic of the UE and reduce occupied air interface resources while improving user experience.

In a possible implementation, the man-machine interaction environment includes any one or any combination of the following: whether a screen of the UE is lit; whether an interface of a call program of the UE is visible; whether a hands-free function of the UE is enabled; whether a wired headset of the UE is inserted; whether a wireless headset of the UE is connected; or whether the user is within a visible range of the UE. According to the foregoing method, the current status of the user, for example, whether the user gazes at the screen of the UE or whether the user is suitable for watching or listening to media content, may be determined based on whether the screen of the UE is lit, whether the interface of the call program of the UE is visible, whether the hands-free function of the UE is enabled, whether the wired headset of the UE is inserted, whether the wireless headset of the UE is connected, or whether the user is within the visible range of the UE. Then, the to-be-delivered media content may be determined, or it may be determined not to deliver media content to the UE during the call service execution period.

In a possible implementation, the determining to-be-delivered media content based on the call service man-machine interaction environment indication information includes: determining a media form based on the call service man-machine interaction environment indication information, where the media form includes an audio form, a silent video form, an audible video form, or a low-volume video form, and a default volume of media content in the low-volume video form is greater than 0 and less than a preset threshold; and determining media content conforming to the media form as the to-be-delivered media content. According to the foregoing method, the to-be-delivered media content may be determined based on the media form, to improve the delivery effect of the media content.

In a possible implementation, the determining a media form based on the call service man-machine interaction environment indication information includes: if any one of the following holds true, determining that the media form is the audio form: the call service man-machine interaction environment indication information indicates that a screen of the UE is off; or the call service man-machine interaction environment indication information indicates that a screen of the UE is lit and an interface of a call program of the UE is invisible; or the call service man-machine interaction environment indication information indicates that a screen of the UE is lit, a wired headset of the UE is inserted, and the user is out of a visible range of the UE; or the call service man-machine interaction environment indication information indicates that a screen of the UE is lit, a wireless headset of the UE is connected, and the user is out of a visible range of the UE. According to the foregoing method, when the call service man-machine interaction environment is suitable for the user to listen to sound played by the UE, it may be determined that the media form is the audio form. In this case, the media delivery server does not deliver media content in a video form to the UE. This can reduce or avoid consumption of data traffic of the UE and reduce occupied air interface resources while improving user experience.

In a possible implementation, the determining a media form based on the call service man-machine interaction environment indication information includes: if any one of the following holds true, determining that the media form is the audible video form: the call service man-machine interaction environment indication information indicates that a screen of the UE is lit, an interface of a call program of the UE is visible, and a wired headset of the UE is inserted; or the call service man-machine interaction environment indication information indicates that a screen of the UE is lit, an interface of a call program of the UE is visible, and a wireless headset of the UE is connected; or the call service man-machine interaction environment indication information indicates that a screen of the UE is lit, an interface of a call program of the UE is visible, a wireless headset of the UE is connected, and the user is within a visible range of the UE; or the call service man-machine interaction environment indication information indicates that a screen of the UE is lit, an interface of a call program of the UE is visible, a wired headset of the UE is inserted, and the user is within a visible range of the UE. According to the foregoing method, if the call service man-machine interaction environment is suitable for the user to watch a video played by the UE, the media delivery server may determine that the media form is the audible video form.

In a possible implementation, the determining a media form based on the call service man-machine interaction environment indication information includes: if the call service man-machine interaction environment indication information indicates that a screen of the UE is lit, an interface of a call program of the UE is visible, and a hands-free function of the UE is enabled, determining that the media form is the silent video form. According to the foregoing method, if the call service man-machine interaction environment is suitable for the user to watch a video played by the UE, but the call service man-machine interaction environment is unsuitable for the UE to play external sound, the media delivery server may determine that the media form is the silent video form.

In a possible implementation, the determining a media form based on the call service man-machine interaction environment indication information includes: if any one of the following holds true, determining that the media form is the low-volume video form: the call service man-machine interaction environment indication information indicates that a wired headset of the UE is inserted; or the call service man-machine interaction environment indication information indicates that a wireless headset of the UE is connected; or the call service man-machine interaction environment indication information indicates that a screen of the UE is lit, an interface of a call program of the UE is visible, a hands-free function of the UE is disabled, a wired headset of the UE is not inserted, a wireless headset of the UE is not connected, and the user is within a visible range of the UE. According to the foregoing method, if the call service man-machine interaction environment is suitable for the user to watch a video played by the UE, but the call service man-machine interaction environment is unsuitable for the UE to play excessively high external sound, the media delivery server may determine that the media form is the low-volume video form.

In a possible implementation, the determining to-be-delivered media content based on the call service man-machine interaction environment indication information includes: if any one of the following holds true, determining that the to-be-delivered media content is media content in which media information is transmitted by using a voice: the call service man-machine interaction environment indication information indicates that the screen of the UE is off; or the call service man-machine interaction environment indication information indicates that the screen of the UE is lit and the interface of the call program of the UE is invisible; or the call service man-machine interaction environment indication information indicates that the screen of the UE is lit, the wired headset of the UE is inserted, and the user is out of the visible range of the UE; or the call service man-machine interaction environment indication information indicates that the screen of the UE is lit, the wireless headset of the UE is connected, and the user is out of the visible range of the UE. According to the foregoing method, if the call service man-machine interaction environment is suitable for the user to listen to sound played by the UE, the media delivery server may determine that the to-be-delivered media content is the media content in which the media information is transmitted by using the voice.

In a possible implementation, the determining to-be-delivered media content based on the call service man-machine interaction environment indication information includes: if any one of the following holds true, determining that the to-be-delivered media content is media content in which information is transmitted by using an image: the call service man-machine interaction environment indication information indicates that the screen of the UE is lit, the interface of the call program of the UE is visible, and the hands-free function of the UE is disabled; or the call service man-machine interaction environment indication information indicates that the screen of the UE is lit, the interface of the call program of the UE is visible, and the hands-free function of the UE is enabled. According to the foregoing method, if the call service man-machine interaction environment is suitable for the user to watch a video played by the UE, the media delivery server may determine that the to-be-delivered media content is the media content in which the media information is transmitted by using the image.

In a possible implementation, the determining to-be-delivered media content based on the call service man-machine interaction environment indication information includes: determining a group type of the user based on the call service man-machine interaction environment indication information; and determining the to-be-delivered media content based on the group type. According to the foregoing method, the media content suitable for a group to which the user belongs is delivered to the UE, to improve user experience and the delivery effect of the media content.

In a possible implementation, the determining, based on the call service man-machine interaction environment indication information, not to deliver media content to the UE during the call service execution period includes: if any one of the following holds true, determining not to deliver media content to the UE during the call service execution period: the call service man-machine interaction environment indication information indicates that the screen of the UE is off; or the call service man-machine interaction environment indication information indicates that the screen of the UE is lit and the interface of the call program of the UE is invisible; or the call service man-machine interaction environment indication information indicates that the screen of the UE is lit, the wired headset of the UE is inserted, and the user is out of the visible range of the UE; or the call service man-machine interaction environment indication information indicates that the screen of the UE is lit, the wireless headset of the UE is connected, and the user is out of the visible range of the UE. According to the foregoing method, when the call service man-machine interaction environment is unsuitable for delivering media content, media content may not be delivered to the UE.

In a possible implementation, the receiving call service man-machine interaction environment indication information sent by UE includes: receiving a SIP-info message sent by the UE, where the SIP-info message includes the call service man-machine interaction environment indication information. According to the foregoing method, the UE may send the call service man-machine interaction environment indication information to the media delivery server by using the SIP-info message.

In a possible implementation, the receiving call service man-machine interaction environment indication information sent by UE includes: receiving a SIP-Notification message sent by the UE, where the SIP-Notification message includes the call service man-machine interaction environment indication information; and before the receiving call service man-machine interaction environment indication information sent by UE, the method further includes: sending a subscription message to the UE, where the subscription message is used to subscribe to the call service man-machine interaction environment indication information. According to the foregoing method, the media delivery server may subscribe to the call service man-machine interaction environment indication information by using the subscription message, and the UE may send the call service man-machine interaction environment indication information to the media delivery server by using the SIP-Notification message.

In a possible implementation, the receiving call service man-machine interaction environment indication information sent by UE includes: receiving a request message for requesting media content sent by the UE, where the request message for requesting media content includes the call service man-machine interaction environment indication information. According to the foregoing method, the UE may send the call service man-machine interaction environment indication information to the media delivery server by using the request message for requesting media content.

In a possible implementation, the delivering the to-be-delivered media content to the UE during the call service execution period includes: sending a response message of the request message to the UE during the call service execution period, where the response message includes the to-be-delivered media content. According to the foregoing method, the media delivery server may deliver the to-be-delivered media content to the UE by using the response message of the request message.

In a possible implementation, if it is determined, based on the call service man-machine interaction environment indication information, not to deliver media content to the UE during the call service execution period, the method further includes: sending a response message of the request message to the UE, where the response message includes first indication information, and the first indication information indicates not to deliver media content to the UE during the call service execution period. According to the foregoing method, when determining not to deliver media content to the UE during the call service execution period, the media delivery server may indicate, by using the first indication information, not to deliver media content to the UE, so that the UE determines that the to-be-delivered media content does not need to be received.

In a possible implementation, after the determining to-be-delivered media content based on the call service man-machine interaction environment indication information, the method further includes: establishing a media channel based on the to-be-delivered media content, where a type of the media channel includes an audio media channel or a video media channel, the audio media channel is used to transmit media content in an audio form, and/or the audio media channel is used to transmit voice information that is between UEs corresponding to a call service and that is present during the call service execution period, and the video media channel is used to transmit media content in a video form; and the delivering the to-be-delivered media content to the UE during the call service execution period includes: delivering the to-be-delivered media content to the UE through the media channel during the call service execution period. According to the foregoing method, the media delivery server may deliver the to-be-delivered media content to the UE through the media channel.

In a possible implementation, before the determining to-be-delivered media content based on the call service man-machine interaction environment indication information, the method further includes: establishing a media channel based on a call service, where a type of the media channel includes an audio media channel or a video media channel, the audio media channel is used to transmit media content in an audio form, and/or the audio media channel is used to transmit voice information that is between UEs corresponding to the call service and that is present during the call service execution period, and the video media channel is used to transmit media content in a video form. According to the foregoing method, before determining the to-be-delivered content, the media delivery server may establish the media channel for the call service between the UEs.

In a possible implementation, after the determining to-be-delivered media content based on the call service man-machine interaction environment indication information, the method further includes: if the media channel is incapable of being used to transmit the to-be-delivered media content, performing switching on the media channel; and the delivering the to-be-delivered media content to the UE during the call service execution period includes: delivering the to-be-delivered media content to the UE through a switched media channel during the call service execution period. According to the foregoing method, when the established media channel is unsuitable, a suitable switched media channel may be used, and then the to-be-delivered media content may be delivered through the switched media channel.

In a possible implementation, if the media channel is capable of being used to transmit the to-be-delivered media content, the delivering the to-be-delivered media content to the UE during the call service execution period includes: delivering the to-be-delivered media content to the UE through the media channel during the call service execution period. According to the foregoing method, when the established media channel is suitable, the to-be-delivered media content may be delivered by using the established media channel.

In a possible implementation, if it is determined, based on the call service man-machine interaction environment indication information, not to deliver media content to the UE during the call service execution period, the method further includes: establishing a media channel based on a call service, where a type of the media channel includes an audio media channel or a video media channel, the audio media channel is used to transmit media content in an audio form, and/or the audio media channel is used to transmit voice information that is between UEs corresponding to the call service and that is present during the call service execution period, and the video media channel is used to transmit media content in a video form. According to the foregoing method, the media delivery server may establish the media channel for the call service between the UEs.

According to a second aspect, an embodiment of this application provides a media content delivery method. The method can be applied to UE, and the method includes: obtaining call service man-machine interaction environment indication information, where the call service man-machine interaction environment indication information indicates a man-machine interaction environment of a user corresponding to the UE during a call service execution period; sending the call service man-machine interaction environment indication information to a media delivery server; and receiving to-be-delivered media content sent by the media delivery server, and presenting the to-be-delivered media content by using a call program-related program unit.

According to the foregoing method, the UE may send the call service man-machine interaction environment indication information to the media delivery server, so that the media delivery server can determine the to-be-delivered media content based on the indication information. The man-machine interaction environment indicated by the call service man-machine interaction environment indication information can reflect a current status of the user, for example, whether the user gazes at a screen of the UE or whether the user is suitable for watching or listening to media content. Therefore, the to-be-delivered media content determined based on the call service man-machine interaction environment indication information better meets a requirement of the user, and the UE presents the media content that meets the requirement of the user, so that user experience and delivery effect of the media content can be improved.

Alternatively, according to a second aspect, an embodiment of this application provides a media content delivery method. The method can be applied to UE, and the method includes: obtaining call service man-machine interaction environment indication information, where the call service man-machine interaction environment indication information indicates a man-machine interaction environment of a user corresponding to the UE during a call service execution period; sending the call service man-machine interaction environment indication information to a media delivery server; and determining not to present media content.

According to the foregoing method, the UE may send the call service man-machine interaction environment indication information to the media delivery server, so that the media delivery server can determine, based on the indication information, not to deliver media content to the UE during the call service execution period. The man-machine interaction environment indicated by the call service man-machine interaction environment indication information can reflect a current status of the user, for example, whether the user gazes at a screen of the UE or whether the user is suitable for watching or listening to media content. Therefore, when media content is unsuitable for being delivered to the UE, the media delivery server may not deliver media content to the UE. This can reduce or avoid consumption of data traffic of the UE and reduce occupied air interface resources while improving user experience.

In a possible implementation, the obtaining call service man-machine interaction environment indication information includes at least one of the following: detecting whether a screen of the UE is lit; detecting whether an interface of a call program of the UE is visible; detecting whether a hands-free function of the UE is enabled; detecting whether a wired headset of the UE is inserted; detecting whether a wireless headset of the UE is connected; or detecting whether the user is within a visible range of the UE. According to the foregoing method, the UE may detect at least one of the following: whether the screen of the UE is lit, whether the interface of the call program of the UE is visible, whether the hands-free function of the UE is enabled, whether the wired headset of the UE is inserted, whether the wireless headset of the UE is connected, or whether the user is within the visible range of the UE; and obtain the call service man-machine interaction environment indication information.

In a possible implementation, the sending the call service man-machine interaction environment indication information to a media delivery server includes: sending a SIP-info message to the media delivery server, where the SIP-info message includes the call service man-machine interaction environment indication information. According to the foregoing method, the UE may send the call service man-machine interaction environment indication information to the media delivery server by using the SIP-info message.

In a possible implementation, the sending the call service man-machine interaction environment indication information to a media delivery server includes: sending a SIP-Notification message to the media delivery server, where the SIP-Notification message includes the call service man-machine interaction environment indication information; and before the sending the call service man-machine interaction environment indication information to a media delivery server, the method further includes: receiving a subscription message from the media delivery server, where the subscription message is used to subscribe to the call service man-machine interaction environment indication information. According to the foregoing method, the UE may send the call service man-machine interaction environment indication information to the media delivery server based on the subscription message from the media delivery server by using the SIP-Notification message.

In a possible implementation, the sending the call service man-machine interaction environment indication information to a media delivery server includes: sending a request message for requesting media content to the media delivery server, where the request message for requesting media content includes the call service man-machine interaction environment indication information. According to the foregoing method, the UE may send the call service man-machine interaction environment indication information to the media delivery server by using the request message for requesting media content.

In a possible implementation, the receiving to-be-delivered media content sent by the media delivery server includes: receiving a response message of the request message sent by the media delivery server, where the response message includes the to-be-delivered media content. According to the foregoing method, the UE may receive the to-be-delivered media content by using the response message of the request message.

In a possible implementation, the determining not to present media content includes: receiving first indication information sent by the media delivery server, where the first indication information indicates not to deliver media content to the UE during the call service execution period, and determining, based on the first indication information, not to present media content; or determining not to present media content if indication information that is about presentation of media content and that is sent by the media delivery server is not received within a preset time range. According to the foregoing method, the UE may determine, in a plurality of manners, not to present media content.

In a possible implementation, if the call service man-machine interaction environment indication information is included in the request message for requesting media content, the receiving first indication information sent by the media delivery server includes: receiving the response message of the request message sent by the media delivery server, where the response message includes the first indication information. According to the foregoing method, the UE may receive the first indication information by using the response message of the request message.

According to a third aspect, an embodiment of this application provides a media content delivery method. The method can be applied to UE, and the method includes: determining a call service man-machine interaction environment, where the call service man-machine interaction environment is a man-machine interaction environment of a user corresponding to the UE during a call service execution period; determining a media form based on the call service man-machine interaction environment; sending indication information of the media form to a media delivery server; and receiving media content that conforms to the media form and that is sent by the media delivery server, and presenting the media content by using a call program-related program unit.

According to the foregoing method, the UE may determine the media form based on the call service man-machine interaction environment, and indicate the media form to the media delivery server, so that the media delivery server can deliver the media content conforming to the media form to the UE. The call service man-machine interaction environment can reflect a current status of the user, for example, whether the user gazes at a screen of the UE or whether the user is suitable for watching or listening to media content. Therefore, the media form determined based on the call service man-machine interaction environment better meets a requirement of the user, so that user experience and delivery effect of the media content can be improved. Moreover, in comparison with the method provided in the second aspect, the UE may not send call service man-machine interaction environment indication information to the media delivery server, to protect user privacy and improve information security.

Alternatively, according to a third aspect, an embodiment of this application provides a media content delivery method. The method can be applied to UE, and the method includes: determining a call service man-machine interaction environment, where the call service man-machine interaction environment is a man-machine interaction environment of a user corresponding to the UE during a call service execution period; and determining, based on the call service man-machine interaction environment, not to present media content during the call service execution period.

According to the foregoing method, the UE may determine, based on the call service man-machine interaction environment, not to present media content during the call service execution period. The call service man-machine interaction environment can reflect a current status of the user, for example, whether the user gazes at a screen of the UE or whether the user is suitable for watching or listening to media content. Therefore, when media content is unsuitable for being presented, for example, when the user does not gaze at the screen or when the user is unsuitable for watching or listening to media content, the UE may not present media content. This improves user experience. Moreover, in comparison with the method provided in the second aspect, the UE may not send call service man-machine interaction environment indication information to a media delivery server, to protect user privacy and improve information security.

In a possible implementation, the determining a call service man-machine interaction environment includes at least one of the following: detecting whether a screen of the UE is lit; detecting whether an interface of a call program of the UE is visible; detecting whether a hands-free function of the UE is enabled; detecting whether a wired headset of the UE is inserted; detecting whether a wireless headset of the UE is connected; or detecting whether the user is within a visible range of the UE. According to the foregoing method, the UE may detect at least one of the following: whether the screen of the UE is lit, whether the interface of the call program of the UE is visible, whether the hands-free function of the UE is enabled, whether the wired headset of the UE is inserted, whether the wireless headset of the UE is connected, or whether the user is within the visible range of the UE; and determine the call service man-machine interaction environment.

In a possible implementation, the determining a media form based on the call service man-machine interaction environment includes: if any one of the following environments is detected, determining that the media form is an audio form: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE. According to the foregoing method, when the call service man-machine interaction environment is suitable for the user to listen to sound played by the UE, the UE may determine that the media form is the audio form, and indicate the media form to the media delivery server. In this case, the media delivery server does not deliver media content in a video form to the UE. This can reduce or avoid consumption of data traffic of the UE and reduce occupied air interface resources while improving user experience.

In a possible implementation, the determining a media form based on the call service man-machine interaction environment includes: if any one of the following environments is detected, determining that the media form is an audible video form: it is detected that a screen of the UE is lit, an interface of a call program of the UE is visible, and a wired headset of the UE is inserted; or it is detected that a screen of the UE is lit, an interface of a call program of the UE is visible, and a wireless headset of the UE is connected; or it is detected that a screen of the UE is lit, an interface of a call program of the UE is visible, a wireless headset of the UE is connected, and the user is within a visible range of the UE; or it is detected that a screen of the UE is lit, an interface of a call program of the UE is visible, a wired headset of the UE is inserted, and the user is within a visible range of the UE. According to the foregoing method, if the call service man-machine interaction environment is suitable for the user to watch a video played by the UE, the UE may determine that the media form is the audible video form.

In a possible implementation, the determining a media form based on the call service man-machine interaction environment includes: if it is detected that a screen of the UE is lit, an interface of a call program of the UE is visible, and a hands-free function of the UE is enabled, determining that the media form is a silent video form. According to the foregoing method, if the call service man-machine interaction environment is suitable for the user to watch a video played by the UE, but the call service man-machine interaction environment is unsuitable for the UE to play external sound, the UE may determine that the media form is the silent video form.

In a possible implementation, the determining a media form based on the call service man-machine interaction environment includes: if any one of the following environments is detected, determining that the media form is a low-volume video form: it is detected that a wired headset of the UE is inserted; or it is detected that a wireless headset of the UE is connected; or it is detected that a screen of the UE is lit, an interface of a call program of the UE is visible, a hands-free function of the UE is disabled, a wired headset of the UE is not inserted, a wireless headset of the UE is not connected, and the user is within a visible range of the UE. According to the foregoing method, if the call service man-machine interaction environment is suitable for the user to watch a video played by the UE, but the call service man-machine interaction environment is unsuitable for the UE to play excessively high external sound, the UE may determine that the media form is the low-volume video form.

In a possible implementation, the determining, based on the call service man-machine interaction environment, not to present media content during the call service execution period includes: if any one of the following environments is detected, determining not to present media content during the call service execution period: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE. According to the foregoing method, when the call service man-machine interaction environment is unsuitable for delivering media content, the UE may not present media content.

According to a fourth aspect, an embodiment of this application provides a media content delivery method. The method can be applied to UE, and the method includes: obtaining media content information; determining a call service man-machine interaction environment, where the call service man-machine interaction environment is a man-machine interaction environment of a user corresponding to the UE during a call service execution period; and determining a media form based on the call service man-machine interaction environment, and presenting, by using a call program-related program unit, media content that conforms to the media form and that is in the media content information.

According to the foregoing method, the UE may first obtain the media content information, determine the call service man-machine interaction environment, and determine the media form based on the call service man-machine interaction environment. In this way, after determining the media form, the UE can present the media content that conforms to the media form and that is in the media content information. The call service man-machine interaction environment can reflect a current status of the user, for example, whether the user gazes at a screen of the UE or whether the user is suitable for watching or listening to media content. Therefore, the media form determined based on the call service man-machine interaction environment better meets a requirement of the user, so that user experience and delivery effect of the media content can be improved. In addition, after determining the media form, the UE does not need to request the media content from a media delivery server, and directly locally determines the media content conforming to the media form and presents the media content, so that the media content can be presented in time. This shortens a time in which the UE determines the media form and the UE presents the media content. Moreover, in comparison with the method provided in the second aspect, the UE may not send call service man-machine interaction environment indication information to the media delivery server, to protect user privacy and improve information security.

Alternatively, according to a fourth aspect, an embodiment of this application provides a media content delivery method. The method can be applied to UE, and the method includes: obtaining media content information; determining a call service man-machine interaction environment, where the call service man-machine interaction environment is a man-machine interaction environment of a user corresponding to the UE during a call service execution period; and determining, based on the call service man-machine interaction environment, not to present media content during the call service execution period.

According to the foregoing method, the UE may first obtain the media content information, determine the call service man-machine interaction environment, and determine, based on the call service man-machine interaction environment, not to present media content during the call service execution period. The call service man-machine interaction environment can reflect a current status of the user, for example, whether the user gazes at a screen of the UE or whether the user is suitable for watching or listening to media content. Therefore, when media content is unsuitable for being presented, for example, when the user does not gaze at the screen or when the user is unsuitable for watching or listening to media content, the UE may not present media content. This can reduce or avoid consumption of data traffic of the UE and reduce occupied air interface resources while improving user experience. Moreover, in comparison with the method provided in the second aspect, the UE may not send call service man-machine interaction environment indication information to a media delivery server, to protect user privacy and improve information security.

In a possible implementation, the determining a call service man-machine interaction environment includes at least one of the following: detecting whether a screen of the UE is lit; detecting whether an interface of a call program of the UE is visible; detecting whether a hands-free function of the UE is enabled; detecting whether a wired headset of the UE is inserted; detecting whether a wireless headset of the UE is connected; or detecting whether the user is within a visible range of the UE. According to the foregoing method, the UE may detect at least one of the following: whether the screen of the UE is lit, whether the interface of the call program of the UE is visible, whether the hands-free function of the UE is enabled, whether the wired headset of the UE is inserted, whether the wireless headset of the UE is connected, or whether the user is within the visible range of the UE; and determine the call service man-machine interaction environment.

In a possible implementation, the determining a media form based on the call service man-machine interaction environment includes: if any one of the following environments is detected, determining that the media form is an audio form: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE. According to the foregoing method, when the call service man-machine interaction environment is suitable for the user to listen to sound played by the UE, the UE may determine that the media form is the audio form.

In a possible implementation, the determining a media form based on the call service man-machine interaction environment includes: if any one of the following environments is detected, determining that the media form is an audible video form: it is detected that a screen of the UE is lit, an interface of a call program of the UE is visible, and a wired headset of the UE is inserted; or it is detected that a screen of the UE is lit, an interface of a call program of the UE is visible, and a wireless headset of the UE is connected; or it is detected that a screen of the UE is lit, an interface of a call program of the UE is visible, a wireless headset of the UE is connected, and the user is within a visible range of the UE; or it is detected that a screen of the UE is lit, an interface of a call program of the UE is visible, a wired headset of the UE is inserted, and the user is within a visible range of the UE. According to the foregoing method, if the call service man-machine interaction environment is suitable for the user to watch a video played by the UE, the UE may determine that the media form is the audible video form.

In a possible implementation, the determining a media form based on the call service man-machine interaction environment includes: if it is detected that a screen of the UE is lit, an interface of a call program of the UE is visible, and a hands-free function of the UE is enabled, determining that the media form is a silent video form. According to the foregoing method, if the call service man-machine interaction environment is suitable for the user to watch a video played by the UE, but the call service man-machine interaction environment is unsuitable for the UE to play external sound, the UE may determine that the media form is the silent video form.

In a possible implementation, the determining a media form based on the call service man-machine interaction environment includes: if any one of the following environments is detected, determining that the media form is a low-volume video form: it is detected that a wired headset of the UE is inserted; or it is detected that a wireless headset of the UE is connected; or it is detected that a screen of the UE is lit, an interface of a call program of the UE is visible, a hands-free function of the UE is disabled, a wired headset of the UE is not inserted, a wireless headset of the UE is not connected, and the user is within a visible range of the UE. According to the foregoing method, if the call service man-machine interaction environment is suitable for the user to watch a video played by the UE, but the call service man-machine interaction environment is unsuitable for the UE to play excessively high external sound, the UE may determine that the media form is the low-volume video form.

In a possible implementation, the determining, based on the call service man-machine interaction environment, not to present media content during the call service execution period includes: if any one of the following environments is detected, determining not to present media content during the call service execution period: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE. According to the foregoing method, when the call service man-machine interaction environment is unsuitable for delivering media content, the UE may not present media content.

According to a fifth aspect, an embodiment of this application provides a media delivery server. The media delivery server includes a transceiver module and a processing module. The transceiver module is configured to receive call service man-machine interaction environment indication information sent by UE, where the call service man-machine interaction environment indication information indicates a man-machine interaction environment of a user corresponding to the UE during a call service execution period. The processing module is configured to determine to-be-delivered media content based on the call service man-machine interaction environment indication information. The transceiver module is further configured to deliver the to-be-delivered media content to the UE during the call service execution period.

Alternatively, according to a fifth aspect, an embodiment of this application provides a media delivery server. The media delivery server includes a transceiver module and a processing module. The transceiver module is configured to receive call service man-machine interaction environment indication information sent by UE, where the call service man-machine interaction environment indication information indicates a man-machine interaction environment of a user corresponding to the UE during a call service execution period. The processing module is configured to determine, based on the call service man-machine interaction environment indication information, not to deliver media content to the UE during the call service execution period.

In a possible implementation, the man-machine interaction environment includes any one or any combination of the following: whether a screen of the UE is lit; whether an interface of a call program of the UE is visible; whether a hands-free function of the UE is enabled; whether a wired headset of the UE is inserted; whether a wireless headset of the UE is connected; or whether the user is within a visible range of the UE.

In a possible implementation, the processing module is specifically configured to determine a media form based on the call service man-machine interaction environment indication information, where the media form includes an audio form, a silent video form, an audible video form, or a low-volume video form, and a default volume of media content in the low-volume video form is greater than 0 and less than a preset threshold. The processing module is further specifically configured to determine media content conforming to the media form as the to-be-delivered media content.

In a possible implementation, the processing module is specifically configured to: if any one of the following holds true, determine that the media form is the audio form: the call service man-machine interaction environment indication information indicates that a screen of the UE is off; or the call service man-machine interaction environment indication information indicates that a screen of the UE is lit and an interface of a call program of the UE is invisible; or the call service man-machine interaction environment indication information indicates that a screen of the UE is lit, a wired headset of the UE is inserted, and the user is out of a visible range of the UE; or the call service man-machine interaction environment indication information indicates that a screen of the UE is lit, a wireless headset of the UE is connected, and the user is out of a visible range of the UE.

In a possible implementation, the processing module is specifically configured to: if any one of the following holds true, determine that the media form is the audible video form: the call service man-machine interaction environment indication information indicates that a screen of the UE is lit, an interface of a call program of the UE is visible, and a wired headset of the UE is inserted; or the call service man-machine interaction environment indication information indicates that a screen of the UE is lit, an interface of a call program of the UE is visible, and a wireless headset of the UE is connected; or the call service man-machine interaction environment indication information indicates that a screen of the UE is lit, an interface of a call program of the UE is visible, a wireless headset of the UE is connected, and the user is within a visible range of the UE; or the call service man-machine interaction environment indication information indicates that a screen of the UE is lit, an interface of a call program of the UE is visible, a wired headset of the UE is inserted, and the user is within a visible range of the UE.

In a possible implementation, the processing module is specifically configured to: if the call service man-machine interaction environment indication information indicates that a screen of the UE is lit, an interface of a call program of the UE is visible, and a hands-free function of the UE is enabled, determine that the media form is the silent video form.

In a possible implementation, the processing module is specifically configured to: if any one of the following holds true, determine that the media form is the low-volume video form: the call service man-machine interaction environment indication information indicates that a wired headset of the UE is inserted; or the call service man-machine interaction environment indication information indicates that a wireless headset of the UE is connected; or the call service man-machine interaction environment indication information indicates that a screen of the UE is lit, an interface of a call program of the UE is visible, a hands-free function of the UE is disabled, a wired headset of the UE is not inserted, a wireless headset of the UE is not connected, and the user is within a visible range of the UE.

In a possible implementation, the processing module is specifically configured to: if any one of the following holds true, determine that the to-be-delivered media content is media content in which media information is transmitted by using a voice: the call service man-machine interaction environment indication information indicates that the screen of the UE is off; or the call service man-machine interaction environment indication information indicates that the screen of the UE is lit and the interface of the call program of the UE is invisible; or the call service man-machine interaction environment indication information indicates that the screen of the UE is lit, the wired headset of the UE is inserted, and the user is out of the visible range of the UE; or the call service man-machine interaction environment indication information indicates that the screen of the UE is lit, the wireless headset of the UE is connected, and the user is out of the visible range of the UE.

In a possible implementation, the processing module is specifically configured to: if any one of the following holds true, determine that the to-be-delivered media content is media content in which information is transmitted by using an image: the call service man-machine interaction environment indication information indicates that the screen of the UE is lit, the interface of the call program of the UE is visible, and the hands-free function of the UE is disabled; or the call service man-machine interaction environment indication information indicates that the screen of the UE is lit, the interface of the call program of the UE is visible, and the hands-free function of the UE is enabled.

In a possible implementation, the processing module is specifically configured to determine a group type of the user based on the call service man-machine interaction environment indication information; and determine the to-be-delivered media content based on the group type.

In a possible implementation, the processing module is specifically configured to: if any one of the following holds true, determine not to deliver media content to the UE during the call service execution period: the call service man-machine interaction environment indication information indicates that the screen of the UE is off; or the call service man-machine interaction environment indication information indicates that the screen of the UE is lit and the interface of the call program of the UE is invisible; or the call service man-machine interaction environment indication information indicates that the screen of the UE is lit, the wired headset of the UE is inserted, and the user is out of the visible range of the UE; or the call service man-machine interaction environment indication information indicates that the screen of the UE is lit, the wireless headset of the UE is connected, and the user is out of the visible range of the UE.

In a possible implementation, the transceiver module is specifically configured to receive a SIP-info message sent by the UE, where the SIP-info message includes the call service man-machine interaction environment indication information.

In a possible implementation, the transceiver module is specifically configured to receive a SIP-Notification message sent by the UE, where the SIP-Notification message includes the call service man-machine interaction environment indication information. The transceiver module is further configured to send a subscription message to the UE, where the subscription message is used to subscribe to the call service man-machine interaction environment indication information.

In a possible implementation, the transceiver module is specifically configured to receive a request message for requesting media content sent by the UE, where the request message for requesting media content includes the call service man-machine interaction environment indication information.

In a possible implementation, the transceiver module is specifically configured to send a response message of the request message to the UE during the call service execution period, where the response message includes the to-be-delivered media content.

In a possible implementation, the transceiver module is further configured to send a response message of the request message to the UE, where the response message includes first indication information, and the first indication information indicates not to deliver media content to the UE during the call service execution period.

In a possible implementation, the processing module is further configured to establish a media channel based on the to-be-delivered media content, where a type of the media channel includes an audio media channel or a video media channel, the audio media channel is used to transmit media content in an audio form, and/or the audio media channel is used to transmit voice information that is between UEs corresponding to a call service and that is present during the call service execution period, and the video media channel is used to transmit media content in a video form. The transceiver module is specifically configured to deliver the to-be-delivered media content to the UE through the media channel during the call service execution period.

In a possible implementation, the processing module is further configured to establish a media channel based on a call service, where a type of the media channel includes an audio media channel or a video media channel, the audio media channel is used to transmit media content in an audio form, and/or the audio media channel is used to transmit voice information that is between UEs corresponding to the call service and that is present during the call service execution period, and the video media channel is used to transmit media content in a video form.

In a possible implementation, the processing module is further configured to: if the media channel is incapable of being used to transmit the to-be-delivered media content, perform switching on the media channel. The transceiver module is specifically configured to deliver the to-be-delivered media content to the UE through a switched media channel during the call service execution period.

In a possible implementation, the transceiver module is specifically configured to deliver the to-be-delivered media content to the UE through the media channel during the call service execution period.

In a possible implementation, the processing module is further configured to establish a media channel based on a call service, where a type of the media channel includes an audio media channel or a video media channel, the audio media channel is used to transmit media content in an audio form, and/or the audio media channel is used to transmit voice information that is between UEs corresponding to the call service and that is present during the call service execution period, and the video media channel is used to transmit media content in a video form.

According to a sixth aspect, an embodiment of this application provides UE. The UE includes a processing module and a transceiver module. The processing module is configured to obtain call service man-machine interaction environment indication information, where the call service man-machine interaction environment indication information indicates a man-machine interaction environment of a user corresponding to the UE during a call service execution period. The transceiver module is configured to send the call service man-machine interaction environment indication information to a media delivery server. The transceiver module is further configured to receive to-be-delivered media content sent by the media delivery server. The processing module is further configured to present the to-be-delivered media content by using a call program-related program unit.

Alternatively, according to a sixth aspect, an embodiment of this application provides UE. The UE includes a processing module and a transceiver module. The processing module is configured to obtain call service man-machine interaction environment indication information, where the call service man-machine interaction environment indication information indicates a man-machine interaction environment of a user corresponding to the UE during a call service execution period. The transceiver module is configured to send the call service man-machine interaction environment indication information to a media delivery server. The processing module is further configured to determine not to present media content.

In a possible implementation, the processing module is specifically configured to detect at least one of the following: detect whether a screen of the UE is lit; detect whether an interface of a call program of the UE is visible; detect whether a hands-free function of the UE is enabled; detect whether a wired headset of the UE is inserted; detect whether a wireless headset of the UE is connected; or detect whether the user is within a visible range of the UE.

In a possible implementation, the transceiver module is specifically configured to send a SIP-info message to the media delivery server, where the SIP-info message includes the call service man-machine interaction environment indication information.

In a possible implementation, the transceiver module is specifically configured to send a SIP-Notification message to the media delivery server, where the SIP-Notification message includes the call service man-machine interaction environment indication information. The transceiver module is further configured to receive a subscription message from the media delivery server, where the subscription message is used to subscribe to the call service man-machine interaction environment indication information.

In a possible implementation, the transceiver module is specifically configured to send a request message for requesting media content to the media delivery server, where the request message for requesting media content includes the call service man-machine interaction environment indication information.

In a possible implementation, the transceiver module is specifically configured to receive a response message of the request message sent by the media delivery server, where the response message includes the to-be-delivered media content.

In a possible implementation, the processing module is specifically configured to receive, by using the transceiver module, first indication information sent by the media delivery server, where the first indication information indicates not to deliver media content to the UE during the call service execution period, and the processing module is further specifically configured to determine, based on the first indication information, not to present media content; or
the processing module is specifically configured to determine not to present media content if indication information that is about presentation of media content and that is sent by the media delivery server is not received within a preset time range.

In a possible implementation, the transceiver module is specifically configured to receive the response message of the request message sent by the media delivery server, where the response message includes the first indication information.

According to a seventh aspect, an embodiment of this application provides UE. The UE includes a processing module and a transceiver module. The processing module is configured to determine a call service man-machine interaction environment, where the call service man-machine interaction environment is a man-machine interaction environment of a user corresponding to the UE during a call service execution period. The processing module is further configured to determine a media form based on the call service man-machine interaction environment. The transceiver module is configured to send indication information of the media form to a media delivery server. The transceiver module is further configured to receive media content that conforms to the media form and that is sent by the media delivery server. The processing module is further configured to present the media content by using a call program-related program unit.

Alternatively, according to a seventh aspect, an embodiment of this application provides UE. The UE includes a processing module. The processing module is configured to determine a call service man-machine interaction environment, where the call service man-machine interaction environment is a man-machine interaction environment of a user corresponding to the UE during a call service execution period. The processing module is further configured to determine, based on the call service man-machine interaction environment, not to present media content during the call service execution period.

In a possible implementation, the processing module is specifically configured to detect at least one of the following: detect whether a screen of the UE is lit; detect whether an interface of a call program of the UE is visible; detect whether a hands-free function of the UE is enabled; detect whether a wired headset of the UE is inserted; detect whether a wireless headset of the UE is connected; or detect whether the user is within a visible range of the UE.

In a possible implementation, the processing module is specifically configured to: if any one of the following environments is detected, determine that the media form is an audio form: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE.

In a possible implementation, the processing module is specifically configured to: if any one of the following environments is detected, determine that the media form is an audible video form: it is detected that a screen of the UE is lit, an interface of a call program of the UE is visible, and a wired headset of the UE is inserted; or it is detected that a screen of the UE is lit, an interface of a call program of the UE is visible, and a wireless headset of the UE is connected; or it is detected that a screen of the UE is lit, an interface of a call program of the UE is visible, a wireless headset of the UE is connected, and the user is within a visible range of the UE; or it is detected that a screen of the UE is lit, an interface of a call program of the UE is visible, a wired headset of the UE is inserted, and the user is within a visible range of the UE.

In a possible implementation, the processing module is specifically configured to: if it is detected that a screen of the UE is lit, an interface of a call program of the UE is visible, and a hands-free function of the UE is enabled, determine that the media form is a silent video form.

In a possible implementation, the processing module is specifically configured to: if any one of the following environments is detected, determine that the media form is a low-volume video form: it is detected that a wired headset of the UE is inserted; or it is detected that a wireless headset of the UE is connected; or it is detected that a screen of the UE is lit, an interface of a call program of the UE is visible, a hands-free function of the UE is disabled, a wired headset of the UE is not inserted, a wireless headset of the UE is not connected, and the user is within a visible range of the UE.

In a possible implementation, the processing module is specifically configured to: if any one of the following environments is detected, determine not to present media content during the call service execution period: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE.

According to an eighth aspect, an embodiment of this application provides UE. The UE includes a transceiver module and a processing module. The transceiver module is configured to obtain media content information. The processing module is configured to determine a call service man-machine interaction environment, where the call service man-machine interaction environment is a man-machine interaction environment of a user corresponding to the UE during a call service execution period. The processing module is further configured to: determine a media form based on the call service man-machine interaction environment, and present, by using a call program-related program unit, media content that conforms to the media form and that is in the media content information.

Alternatively, according to an eighth aspect, an embodiment of this application provides UE. The UE includes a transceiver module and a processing module. The transceiver module is configured to obtain media content information. The processing module is configured to determine a call service man-machine interaction environment, where the call service man-machine interaction environment is a man-machine interaction environment of a user corresponding to the UE during a call service execution period. The processing module is further configured to determine, based on the call service man-machine interaction environment, not to present media content during the call service execution period.

In a possible implementation, the processing module is specifically configured to detect at least one of the following: detect whether a screen of the UE is lit; detect whether an interface of a call program of the UE is visible; detect whether a hands-free function of the UE is enabled; detect whether a wired headset of the UE is inserted; detect whether a wireless headset of the UE is connected; or detect whether the user is within a visible range of the UE.

In a possible implementation, the processing module is specifically configured to: if any one of the following environments is detected, determine that the media form is an audio form: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE.

In a possible implementation, the processing module is specifically configured to: if any one of the following environments is detected, determine that the media form is an audible video form: it is detected that a screen of the UE is lit, an interface of a call program of the UE is visible, and a wired headset of the UE is inserted; or it is detected that a screen of the UE is lit, an interface of a call program of the UE is visible, and a wireless headset of the UE is connected; or it is detected that a screen of the UE is lit, an interface of a call program of the UE is visible, a wireless headset of the UE is connected, and the user is within a visible range of the UE; or it is detected that a screen of the UE is lit, an interface of a call program of the UE is visible, a wired headset of the UE is inserted, and the user is within a visible range of the UE.

In a possible implementation, the processing module is specifically configured to: if it is detected that a screen of the UE is lit, an interface of a call program of the UE is visible, and a hands-free function of the UE is enabled, determine that the media form is a silent video form.

In a possible implementation, the processing module is specifically configured to: if any one of the following environments is detected, determine that the media form is a low-volume video form: it is detected that a wired headset of the UE is inserted; or it is detected that a wireless headset of the UE is connected; or it is detected that a screen of the UE is lit, an interface of a call program of the UE is visible, a hands-free function of the UE is disabled, a wired headset of the UE is not inserted, a wireless headset of the UE is not connected, and the user is within a visible range of the UE.

In a possible implementation, the processing module is specifically configured to: if any one of the following environments is detected, determine not to present media content during the call service execution period: it is detected that a screen of the UE is off; or it is detected that a screen of the UE is lit and an interface of a call program of the UE is invisible; or it is detected that a screen of the UE is lit, a wired headset of the UE is inserted, and the user is out of a visible range of the UE; or it is detected that a screen of the UE is lit, a wireless headset of the UE is connected, and the user is out of a visible range of the UE.

According to a ninth aspect, an embodiment of this application provides a media delivery server, including a processor. The processor is configured to: be coupled to a memory, and after reading instructions in the memory, perform the method in the first aspect according to the instructions. The media delivery server may be the media delivery server in the first aspect, or an apparatus including the media delivery server.

With reference to the ninth aspect, in a possible implementation, the media delivery server further includes a memory. The memory is configured to store necessary program instructions and data.

According to a tenth aspect, an embodiment of this application provides UE, including a processor. The processor is configured to: be coupled to a memory, and after reading instructions in the memory, perform the method in any one of the second aspect to the fourth aspect according to the instructions. The UE may be the UE in any one of the second aspect to the fourth aspect, or an apparatus including the UE.

With reference to the tenth aspect, in a possible implementation, the UE further includes a memory. The memory is configured to store necessary program instructions and data.

According to an eleventh aspect, an embodiment of this application provides a media delivery server, including a processor and an interface circuit. The interface circuit is configured to receive a computer program or instructions and transmit the computer program or instructions to the processor. The processor is configured to execute the computer program or instructions, so that the media delivery server performs the method in the first aspect.

According to a twelfth aspect, an embodiment of this application provides UE, including a processor and an interface circuit. The interface circuit is configured to receive a computer program or instructions and transmit the computer program or instructions to the processor. The processor is configured to execute the computer program or instructions, so that the UE performs the method in any one of the second aspect to the fourth aspect.

According to a thirteenth aspect, an embodiment of this application provides a computer-readable storage medium. The computer-readable storage medium stores instructions. When the instructions are run on a computer, the computer is enabled to perform the method in any one of the foregoing aspects.

According to a fourteenth aspect, an embodiment of this application provides a computer program product including instructions. When the computer program product runs on a computer, the computer is enabled to perform the method in any one of the foregoing aspects.

For technical effects brought by any one of the possible implementations of the fifth aspect to the fourteenth aspect, refer to the technical effects brought by any one of the first aspect to the fourth aspect or different possible implementations of any one of the aspects. Details are not described herein again.

According to a fifteenth aspect, an embodiment of this application provides a communication system. The communication system includes a media delivery server configured to perform the method in the first aspect and UE configured to perform the method in the second aspect, or the communication system includes UE configured to perform the method in the third aspect, or the communication system includes UE configured to perform the method in the fourth aspect.

### BRIEF DESCRIPTION OF DRAWINGS

FIG. 1A and FIG. 1B are a schematic flowchart 1 of a media content delivery process according to an embodiment of this application;
FIG. 2A and FIG. 2B are a schematic flowchart 2 of a media content delivery process according to an embodiment of this application;
FIG. 3A is a schematic diagram 1 of an architecture of a communication system according to an embodiment of this application;
FIG. 3B is a schematic diagram 2 of an architecture of a communication system according to an embodiment of this application;
FIG. 4 is a schematic diagram of a hardware structure of a device according to an embodiment of this application;
FIG. 5 is a schematic flowchart 1 of a media content delivery method according to an embodiment of this application;
FIG. 6A is a schematic diagram of a SIP-info message according to an embodiment of this application;
FIG. 6B is a schematic diagram of a SIP-Subscribe message according to an embodiment of this application;
FIG. 7 is a schematic flowchart 2 of a media content delivery method according to an embodiment of this application;
FIG. 8A is a schematic diagram 1 of photographing an image by a mobile phone according to an embodiment of this application;
FIG. 8B is a schematic diagram 2 of photographing an image by a mobile phone according to an embodiment of this application;
FIG. 9 is a schematic flowchart 3 of a media content delivery method according to an embodiment of this application;
FIG. 10 is a schematic flowchart 4 of a media content delivery method according to an embodiment of this application;
FIG. 11 is a schematic diagram of a structure of a media delivery server according to an embodiment of this application; and
FIG. 12 is a schematic diagram of a structure of LTE according to an embodiment of this application.

### DESCRIPTION OF EMBODIMENTS

Before embodiments of this application are described, related technical terms in embodiments of this application are interpreted and described. It can be noted that, these interpretations and descriptions are intended to make embodiments of this application easier to understand, and cannot be considered as any limitation on the protection scope claimed in embodiments of this application.

### 1. Call service

The call service may be a voice call service or a video call service performed by UE that is used as a calling party or a called party and that communicates with another UE through a communication network. That the UE is a calling party is used as an example. The call service may be a voice call service or a video call service performed by the UE by dialing a mobile phone number, a fixed-line phone number, or a customer service center number. Alternatively, the call service may be a voice call service or a video call service performed by the UE by calling another UE by using a real-time communication (real-time communication, RTC) application. That the UE is a called party is used as an example. The call service may be a voice call service or a video call service performed by the UE by receiving a call from a mobile phone, a fixed-line phone, or a customer service center. Alternatively, the call service may be a voice call service or a video call service performed by the UE by receiving a call from another UE by using an RTC application.

### 2. Call service execution period

The call service execution period may refer to an entire time range from dialing of a party participating in a call service to termination (interruption or stopping) of the call service, and sometimes may also be referred to as a "call process", a "call service process", or the like.

For example, the call service execution period may include: a period after a user of calling UE calls called UE and before the calling UE receives a ring back tone; a period after the calling UE receives the ring back tone and before the called UE is connected; a process of a call between the user of the calling UE and a user of the called UE; after the call ends, a period after the user of one UE hangs up and before the user of the other UE hangs up; and a period after the user of the calling UE calls the called UE, the called UE cannot be connected due to power-off, arrears, a poor network, or another reason, and before the user of the calling UE hangs up.

### 3. Media content

The media content may be media content suitable for presentation on UE during a call service execution period, for example, information that is presented on the UE during the call service execution period and that is expected to be pushed to the UE, such as news, advertisements, recruitment information, landscape pictures, and persons' deeds.

### 4. Media form

The media form may also be referred to as a form of media content. The media form includes one or more of an audio form, a silent video form, an audible video form, or a low-volume video form. The silent video form, the audible video form, and the low-volume video form may be collectively referred to as video forms. A volume of media content in the silent video form is less than or equal to a first preset threshold. A volume of media content in the audible video form is greater than or equal to a second preset threshold. A default volume of media content in the low-volume video form is greater than 0 and less than a third preset threshold. For example, the volume of the media content in the low-volume video form is 10% less than the volume of the media content in the audible video form. In embodiments of this application, the first preset threshold, the second preset threshold, and the third preset threshold may be identical or different.

It can be understood that in embodiments of this application, if the media form is the audio form, presenting media content on UE can be understood as playing media content in the audio form by the UE. If the media form is the silent video form, the audible video form, or the low-volume video form, presenting media content on UE can be understood as playing media content in the video form by the UE.

### 5. Media content in which media information is transmitted by using a voice

The media content in which the media information is transmitted by using the voice may be media content in a video form or media content in an audio form. If the media content in which the media information is transmitted by using the voice is media content in a video form, for the media content, information is transmitted mainly by using a voice in a video, and an image (or a picture) in the video may assist in information transmission. A recruitment advertisement is used as an example. For the recruitment advertisement, if media information is transmitted by using a voice, a user can learn, by listening to the recruitment advertisement, main information to be conveyed by the recruitment advertisement. The media content in which the media information is transmitted by using the voice may be alternatively epidemic prevention publicity, a traffic safety public service advertisement, or other media content in which information is transmitted mainly by using a voice.

### 6. Media content in which information is transmitted by using an image

The media content in which the information is transmitted by using the image may be media content in a video form. For the media content, information is transmitted mainly by using an image (or a picture) in a video, and sound in the video may assist in information transmission, or sound in the video does not play a role in information transmission. For example, the media content in which the information is transmitted by using the image may be a sales advertisement of an automobile, landscape picture presentation, motion presentation, or other media content with a desirable video presentation effect.

### 7. Audio media channel and video media channel

The audio media channel may be used to transmit media content in an audio form, and/or used to transmit voice information that is between UEs corresponding to a call service and that is present during a call service execution period (for example, content of a call between a user of UE 1 and a user of UE 2 corresponding to the call service). The video media channel may be used to transmit media content in a video form. The audio media channel may also be referred to as an audio media resource channel. The video media channel may also be referred to as a video media resource channel.

It can be understood that the audio media channel or the video media channel may be established according to a protocol in the conventional technology, for example, a session initiation protocol (session initiation protocol, SIP). In different protocols, processes of establishing the audio media channel or the video media channel may be different. For details, refer to explanations and descriptions in the conventional technology. Details are not described herein.

For ease of understanding technical solutions of this application, the following separately uses an example in which a media resource system (media resource system, MRS) delivers media content to UE in a process in which the UE calls another UE by dialing a number, and uses an example in which the MRS delivers media content to the UE in a process in which the UE calls another UE by using an RTC application, to describe a media content delivery process.

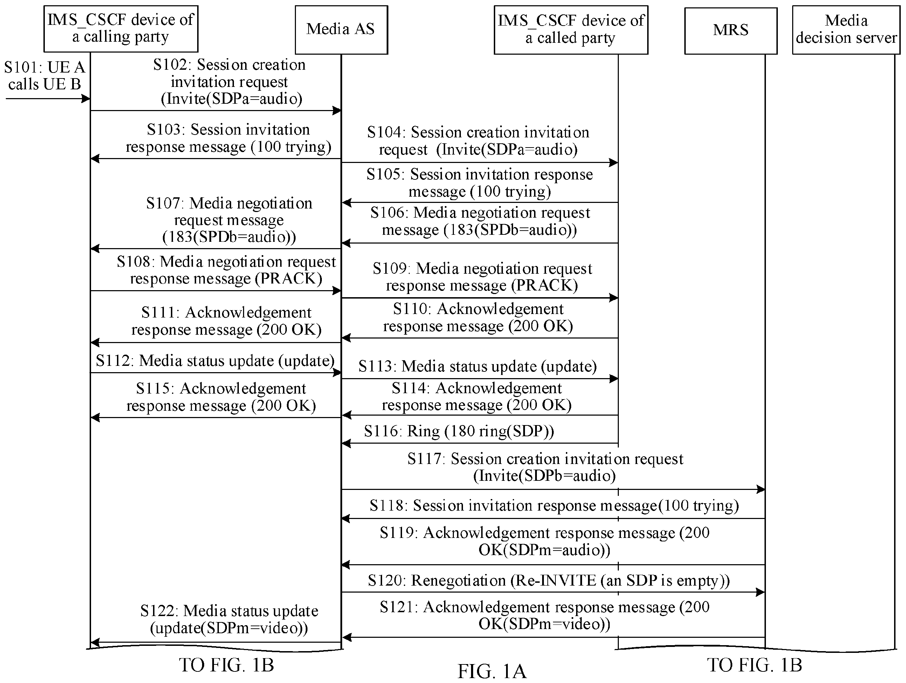

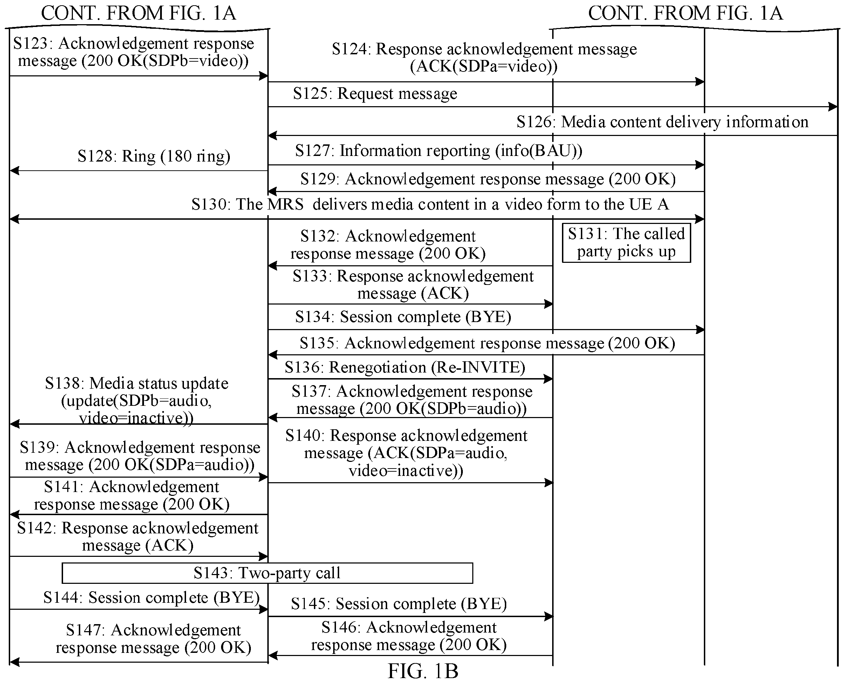

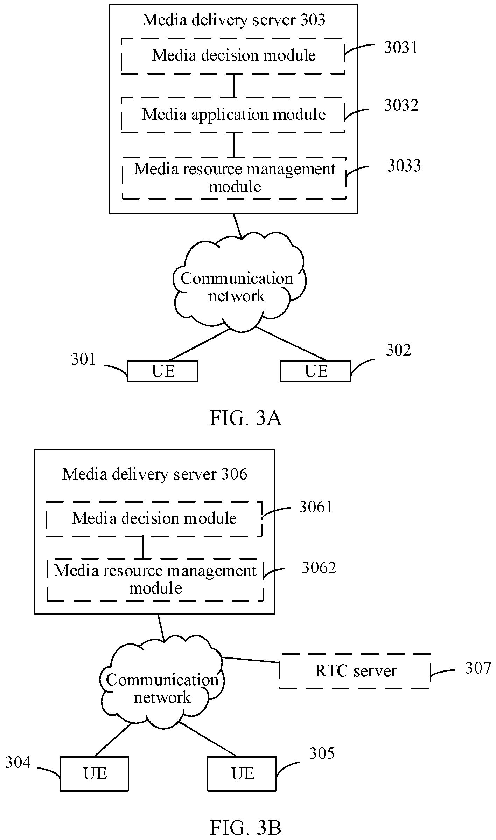

FIG. 1A and FIG. 1B are a schematic flowchart in which an MRS delivers media content in a video form to UE A when the UE A calls UE B by dialing a number of the UE B to perform a voice call service. For details, refer to descriptions in S101 to S147. A method shown in FIG. 1A and FIG. 1B can be applied to a communication system shown in FIG. 3A.

S 101: The UE A calls the UE B.

For example, a user corresponding to the UE A dials the number of the UE B to call the UE B. The call made by the UE A to the UE B may be triggered to an IMS call session control function (call session control function, CSCF) device of a calling party (namely, the UE A) (referred to as an IMS_CSCF device of the calling party for short below).

S102 and S103: The IMS_CSCF device of the calling party sends a session creation invitation request (Invite(SDPa=audio) to a media application server (media application server, Media AS). After receiving the session creation invitation request, the Media AS sends a session invitation response message (100 trying) to the IMS_CSCF device of the calling party. The session creation invitation request may carry a session description protocol (session description protocol, SDP) parameter SDPa=audio, to indicate to perform a voice call service.

S104 and S105: The Media AS sends a session creation invitation request (Invite(SDPa=audio) to an IMS_CSCF device of a called party (namely, the UE B). After receiving the session creation invitation request, the IMS_CSCF device of the called party sends a session invitation response message (100 trying) to the Media AS. The session creation invitation request may carry an SDP parameter SDPa=audio.

S106 to S111: The IMS_CSCF device of the called party sends a media negotiation request message (183(SPDb=audio)) to the Media AS. After receiving the media negotiation request message, the Media AS sends the media negotiation request message (183(SPDb=audio)) to the IMS_CSCF device of the calling party. The media negotiation request message may carry an SDP parameter SDPb=audio, to request establishment of an audio media channel between the MRS and the UE A. After receiving the media negotiation request message, the IMS_CSCF device of the calling party sends a media negotiation request response message (PRACK) to the Media AS. After receiving the media negotiation request response message, the Media AS sends the media negotiation request response message to the IMS_CSCF device of the called party, to respond to the IMS_CSCF device of the called party. After receiving the media negotiation request response message, the IMS_CSCF device of the called party sends an acknowledgement response message (200 OK) to the Media AS. After receiving the acknowledgement response message, the Media AS sends the acknowledgement response message (200 OK) to the IMS_CSCF device of the calling party, to confirm that the IMS_CSCF device of the calling party is connected.

S112 to S116: The IMS_CSCF device of the calling party sends a media status update (update) message to the Media AS. After receiving the media status update message, the Media AS sends the media status update message to the IMS_CSCF device of the called party, to establish the audio media channel between the MRS and the UE A. After receiving the media status update message, the IMS_CSCF device of the called party sends an acknowledgement response message (200 OK) to the Media AS. After receiving the acknowledgement response message, the Media AS sends the acknowledgement response message to the IMS_CSCF device of the calling party. In this case, the audio media channel is established successfully. Subsequently, the IMS_CSCF device of the called party sends a ring (180 ring(SDP)) message to the Media AS, and the UE B starts to ring.

S 117 to S 124: The Media AS sends a session creation invitation request (Invite(SDPb=audio) to the MRS. The session creation invitation request may carry the SDP parameter SDPb=audio. After receiving the session creation invitation request, the MRS sends a session invitation response message (100 trying) to the Media AS. Subsequently, the MRS sends an acknowledgement response message (200 OK(SDPm=audio)) to the Media AS. The acknowledgement response message may carry an SDP parameter SDPm=audio. After receiving the acknowledgement response message, the Media AS sends a renegotiation (Re-INVITE) message to the MRS. After receiving the renegotiation message, the MRS sends an acknowledgement response message (200 OK(SDPm=video)) to the Media AS. The acknowledgement response message may carry an SDP parameter SDPm=video. After receiving the acknowledgement response message, the Media AS sends a media status update (update(SDPm=video)) message to the IMS_CSCF device of the calling party. The media status update message may carry the SDP parameter SDPm=video. After receiving the media status update message, the IMS_CSCF device of the calling party sends an acknowledgement response message (200 OK(SDPb=video)) to the Media AS. The acknowledgement response message may carry an SDP parameter SDPb=video. After receiving the acknowledgement response message, the Media AS sends the response acknowledgement (acknowledgement, ACK) message to the MRS. The response acknowledgement message may carry an SDP parameter SDPa=video. In this case, the audio media channel is switched to a video media channel. Switching from the audio media channel to the video media channel may also be described as changing from the audio media channel to the video media channel.

S125 to S 130: The Media AS sends a request message to a media decision server to obtain media content delivery policy information. After receiving the request message, the media decision server sends media content delivery information to the Media AS, to indicate to-be-delivered media content. After receiving the media content delivery information, the Media AS sends an information reporting (info) message to the MRS, to control the MRS to deliver the media content in a video form to the UE A. The Media AS may further send a ring (180 ring) message to the IMS_CSCF device of the calling party, so that the user of the UE A determines that the UE B is ringing. After receiving the information reporting message, the MRS sends an acknowledgement response message (200 OK) to the Media AS, and delivers the media content in the video form to the UE A.

S131 to S142: After the called party picks up (that is, the called party answers the call), the IMS_CSCF device of the called party sends an acknowledgement response message (200 OK) to the Media AS. After receiving the acknowledgement response message, the Media AS sends the response acknowledgement (ACK) message to the IMS_CSCF device of the called party. The Media AS further sends a session complete (BYE) message to the MRS. After receiving the session complete message, the MRS sends an acknowledgement response message (200 OK) to the Media AS. After receiving the acknowledgement response message, the Media AS sends a renegotiation (Re-INVITE) message to the IMS_CSCF device of the called party. After receiving the renegotiation message, the IMS_CSCF device of the called party sends an acknowledgement response message (200 OK(SDPb=audio)) to the Media AS. The acknowledgement response message may carry the SDP parameter SDPb=audio. After receiving the acknowledgement response message, the Media AS sends a media status update (update(SDPb=audio, video=inactive)) message to the IMS_CSCF device of the calling party. The media status update message may carry an SDP parameter (SDPb=audio, video=inactive). After receiving the media status update message, the IMS_CSCF device of the calling party sends an acknowledgement response message (200 OK(SDPa=audio)) to the Media AS. The acknowledgement response message may carry the SDP parameter SDPa=audio. After receiving the acknowledgement response message, the Media AS sends the response acknowledgement (ACK(SDPa=audio, video=inactive)) message to the IMS_CSCF device of the called party. The response acknowledgement message may carry an SDP parameter (SDPa=audio, video=inactive). The Media AS may further send an acknowledgement response message (200 OK) to the IMS_CSCF device of the calling party. After receiving the acknowledgement response message, the IMS_CSCF device of the calling party sends the response acknowledgement (ACK) message to the Media AS. In this case, the video media channel is switched to an audio media channel.

S143 to S 147: The user of the UE A starts a call with a user of the UE B. After the call ends, the IMS_CSCF device of the calling party sends a call session complete (BYE) message to the Media AS. After receiving the session complete message, the Media AS sends the session complete (BYE) message to the IMS_CSCF device of the called party. After receiving the session complete message, the IMS_CSCF device of the called party sends an acknowledgement response message (200 OK) to the Media AS. After receiving the acknowledgement response message, the Media AS sends the acknowledgement response message (200 OK) to the IMS_CSCF device of the calling party.

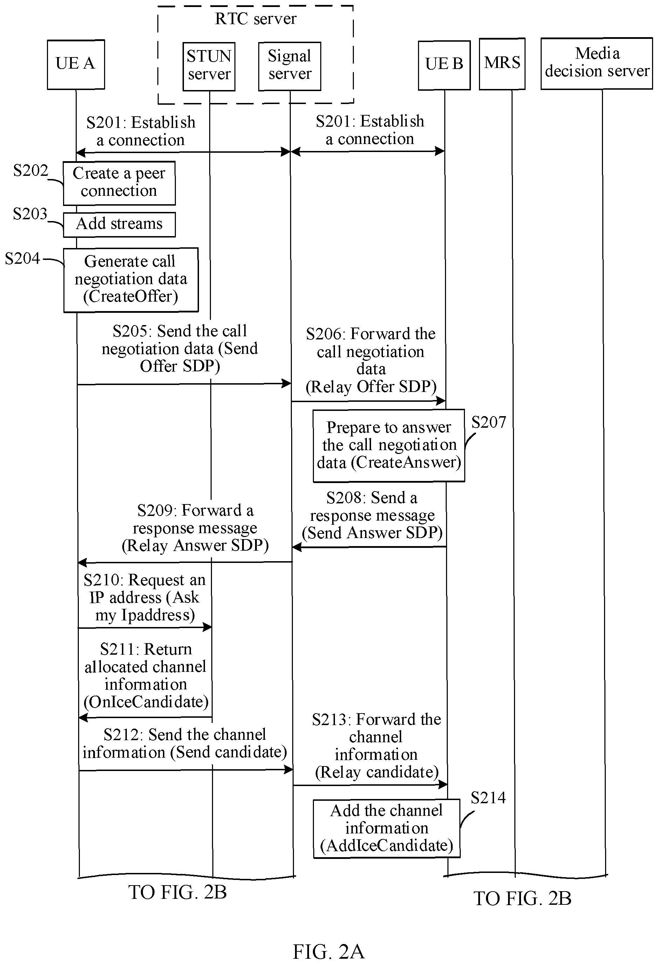

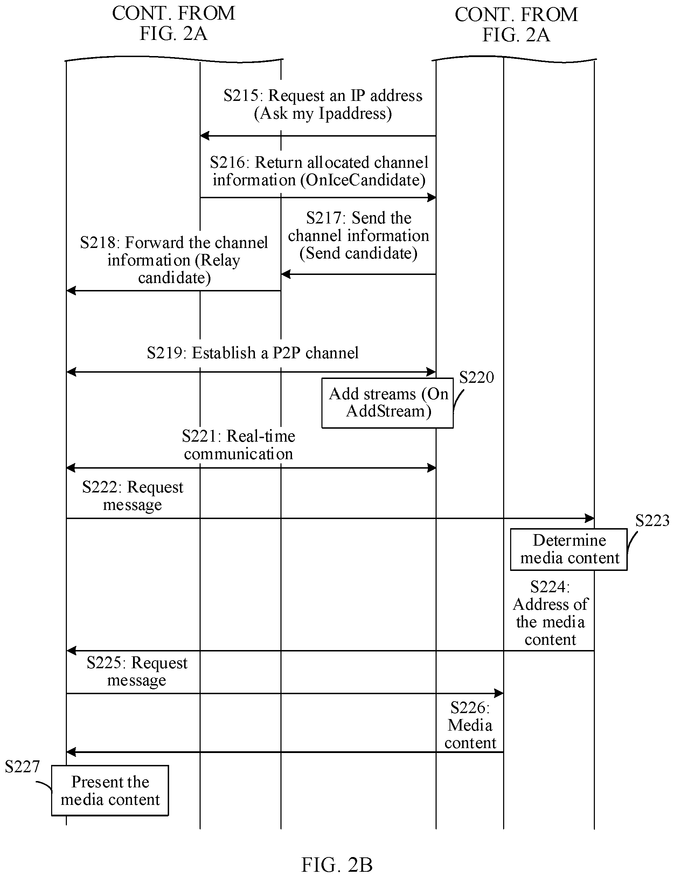

FIG. 2A and FIG. 2B are a schematic flowchart in which an MRS delivers media content to UE A when the UE A calls UE B by using an RTC application to perform a voice call service. For details, refer to descriptions in S201 to S226. A method shown in FIG. 2A and FIG. 2B can be applied to a communication system shown in FIG. 3B.

S201: The RTC application of the UE A establishes a connection to a signal server (Signal Server), and an RTC application of the UE B establishes a connection to the signal server.

S202 and S203: The UE A creates a peer connection (Create PeerConnection) and adds streams (Add Streams).

For example, the RTC application program of the UE A starts an audio device and a video device of the UE A, and determines parameters such as an audio stream or a video stream.

S204 to S209: The UE A generates call negotiation data (CreateOffer), and the RTC application program of the UE A invokes the signal server to initiate a call setup request, and sends the call negotiation data (Send Offer SDP) to the signal server. The call negotiation data may indicate whether a current session includes the parameters such as the audio stream or the video stream. After receiving the call negotiation data, the signal server forwards the call negotiation data (Relay Offer SDP) to the RTC application program of the UE B. After receiving the call negotiation data, the RTC application program of the UE B starts audio and video devices of the UE B, prepares to answer the call negotiation data (CreateAnswer), and sends a response message (Send Answer SDP) to the signal server. After receiving the response message, the signal server forwards the response message (Relay Answer SDP) to the UE A.

S210 to S214: The UE A requests an IP address (Ask my Ipaddress) from a session traversal utilities for network address translation (network address translation, NAT) server (session traversal utilities for NAT server, STUN Server). The STUN server returns allocated channel information (OnIceCandidate) to the UE A. After receiving the channel information, the UE A sends the channel information (Send candidate) to the signal server. After receiving the channel information, the signal server forwards the channel information (Relay candidate) to the UE B. After receiving the channel information, the UE B may add the channel information (AddIceCandidate).

S215 to S218: The UE B requests an IP address (Ask my Ipaddress) from the STUN server. The STUN server returns allocated channel information (OnIceCandidate) to the UE B. After receiving the channel information, the UE B sends the channel information (Send candidate) to the UE A through the signal server. A process of S215 to S218 is similar to a process of S210 to S213. Therefore, for the process, refer to the descriptions in S210 to S213. Details are not described herein again.

S219: The UE A and the UE B establish a point to point (point to point, P2P) channel (P2P Channel), for example, a P2P channel for audio and video transmission.

S220: The UE B adds streams (OnAddStream).

S221: The UE A communicates with the UE B in real time. If the UE A and the UE B have established the P2P channel for audio and video transmission, the UE A and the UE B perform real-time audio and video communication.

S222 to S224: The UE A sends a request message to a media decision server. After receiving the request message, the media decision server determines media content to be delivered to the UE A, and sends an address of the determined media content to the UE A.

S225 to S227: The UE A requests the media content corresponding to the address of the media content from the MRS based on the address of the media content, and presents the media content after obtaining the media content.

The following details implementations of embodiments of this application with reference to the accompanying drawings.

The methods provided in embodiments of this application can be applied to various communication systems. For example, the communication system may be a Long Term Evolution (long term evolution, LTE) system, a 5th generation (5th generation, 5G) communication system, a Wireless Fidelity (wireless fidelity, Wi-Fi) system, or a 3rd generation partnership project (3rd generation partnership project, 3GPP) related communication system, a future evolved communication system, or a system in which a plurality of systems are converged. This is not limited. 5G may also be referred to as new radio (new radio, NR). The following uses the communication systems shown in FIG. 3A and FIG. 3B as examples to describe the methods provided in embodiments of this application.

FIG. 3A is a schematic diagram of an architecture of a communication system according to an embodiment of this application. The communication system shown in FIG. 3A may include a media delivery server 303, UE 301, and UE 302. The media delivery server 303, the UE 301, and the UE 302 may be connected to each other through a communication network. The communication network may be an IMS network. The IMS network may be responsible for routing of call-related signaling messages, and is connected to the calling and called UEs and the media delivery server 303. For example, the IMS network may send media content sent by the media delivery server 303 to the UE 301 or the UE 302. The IMS network may also send a message of the UE 301 or the UE 302 to the media delivery server 303. The IMS network may also transmit messages between the UE 301 and the UE 302.

The UE in FIG. 3A, for example, the UE 301 or the UE 302, may be a device that has a call function and a media content delivery function. That the UE has a call function may mean that the UE can perform a call service. That the UE has a media content delivery function may mean that the UE can receive media content and present the media content. For example, the UE in FIG. 3 A may be a handheld device or a wearable device with a wireless communication function. For example, the UE in FIG. 3A may be a mobile phone (mobile phone), a tablet computer, or a smartwatch. In this embodiment of this application, the UE may also be referred to as a terminal or a terminal device. In this embodiment of this application, an apparatus configured to implement functions of the UE may be the UE; or may be an apparatus that can support the UE in implementing the function, for example, a chip system. The apparatus may be installed in the UE or used in collaboration with the UE. In this embodiment of this application, the chip system may include a chip, or may include a chip and another discrete device. In the methods provided in embodiments of this application, an example in which the apparatus configured to implement the functions of the UE is the UE is used to describe the methods provided in embodiments of this application. Unified descriptions are provided herein, and are not described below.

The media delivery server 303 in FIG. 3A may receive indication information that indicates a man-machine interaction environment of a user corresponding to the UE during a call service execution period, and determine, based on the indication information, whether to deliver media content to the UE during the call service execution period. Alternatively, the media delivery server 303 in FIG. 3 A may receive indication information that indicates a man-machine interaction environment of a user corresponding to the UE during a call service execution period, determine to-be-delivered media content based on the indication information, and deliver the to-be-delivered media content to the UE during the call service execution period.

It can be understood that functions of the media delivery server 303 may be jointly deployed on one physical device, to improve cohesiveness (cohesiveness) of the media delivery server 303, and further improve performance of the media delivery server 303. Functions of the media delivery server 303 may be alternatively deployed on a plurality of physical devices, to reduce a requirement on each physical device, so that the functions of the media delivery server 303 are easier to implement.

For example, the functions of the media delivery server 303 are jointly deployed on one physical device. The media delivery server 303 may include a media decision module 3031, a media application module 3032, and a media resource management module 3033. The media application module 3032 may be configured to receive the indication information that indicates the man-machine interaction environment of the user corresponding to the UE during the call service execution period and that is sent by the UE. The media decision module 3031 may be configured to determine, based on the indication information, whether to deliver media content to the UE during the call service execution period, or determine the to-be-delivered media content based on the indication information. The media resource management module 3033 may be configured to deliver the to-be-delivered media content to the UE during the call service execution period.

For example, the functions of the media delivery server 303 are deployed on a plurality of physical devices. A function of the media application module 3032 may be deployed on a Media AS (not shown in FIG. 3A) that is configured to implement the function of the media application module 3032. A function of the media decision module 3031 may be deployed on a media decision server (not shown in FIG. 3A) that is configured to implement the function of the media decision module 3031. A function of the media resource management module 3033 may be deployed on an MRS (not shown in FIG. 3A) that is configured to implement the function of the media resource management module 3033.

FIG. 3B is a schematic diagram of an architecture of another communication system according to an embodiment of this application. The communication system shown in FIG. 3B may include a media delivery server 306, UE 304, and UE 305. The media delivery server 306, the UE 304, and the UE 305 may be connected to each other through a communication network. The communication network may be a 4G or 5G network.

The UE in FIG. 3B, for example, the UE 304 or the UE 305, may be a device on which an RTC application is installed and that has a media content delivery function. That the UE has a media content delivery function may mean that the UE can receive media content and present the media content. For example, the UE in FIG. 3B may be a handheld device, a vehicle-mounted device, a wearable device, or a computing device with a wireless communication function. For example, the UE in FIG. 3B may be a mobile phone, a tablet computer, a computer with a wireless sending/receiving function, or a smartwatch.

The media delivery server 306 in FIG. 3B may receive indication information that indicates a man-machine interaction environment of a user corresponding to the UE during a call service execution period, and determine, based on the indication information, whether to deliver media content to the UE during the call service execution period. Alternatively, the media delivery server 306 in FIG. 3B may receive indication information that indicates a man-machine interaction environment of a user corresponding to the UE during a call service execution period, determine to-be-delivered media content based on the indication information, and deliver the to-be-delivered media content to the UE during the call service execution period.

It can be understood that functions of the media delivery server 306 may be jointly deployed on one physical device, to improve cohesiveness of the media delivery server 306, and further improve performance of the media delivery server 306. Functions of the media delivery server 306 may be alternatively deployed on a plurality of physical devices, to reduce a requirement on each physical device, so that the functions of the media delivery server 306 are easier to implement.

For example, the functions of the media delivery server 306 are jointly deployed on one physical device. The media delivery server 306 may include a media decision module 3061 and a media resource management module 3062. The media decision module 3061 may be configured to: receive the indication information that indicates the man-machine interaction environment of the user corresponding to the UE during the call service execution period and that is sent by the UE, and determine, based on the indication information, whether to deliver media content to the UE during the call service execution period. Alternatively, the media decision module 3061 may be configured to: receive the indication information that indicates the man-machine interaction environment of the user corresponding to the UE during the call service execution period and that is sent by the UE, and determine the to-be-delivered media content based on the indication information. The media resource management module 3062 may be configured to deliver the to-be-delivered media content to the UE during the call service execution period.

For example, the functions of the media delivery server 306 are deployed on a plurality of physical devices. A function of the media decision module 3061 may be deployed on a media decision server (not shown in FIG. 3B) that is configured to implement the function of the media decision module 3061. A function of the media resource management module 3062 may be deployed on an MRS (not shown in FIG. 3B) that is configured to implement the function of the media resource management module 3062.

Optionally, the communication system shown in FIG. 3B further includes an RTC server (RTC Server) 307. The RTC Server 307 may provide voice and video communication services with high availability, high quality, and an ultra-low latency. The UE may integrate a real-time communication capability based on a software development kit (software development kit, SDK) provided by the RTC Server 307. The RTC Server 307 may also be responsible for routing of call-related signaling messages, and is connected to the calling and called UEs and the media delivery server 306.

In a possible implementation, the RTC Server 307 may include a STUN server and a signal server. STUN is a network protocol, and allows a client located behind a NAT (or a plurality of NATs) to find out a public IP address of the client, a specific type of the NAT that the client is located behind, and a specific local port bound to an internet (Internet) port. These pieces of information are used to establish user datagram protocol (user datagram protocol, UDP) communication between two hosts that are both located behind a NAT router. The STUN server is a server that processes STUN. The signal server is a server that processes RTC signaling. It can be understood that the STUN server and the signal server may be deployed on one physical device, or may be deployed on different physical devices. This is not limited.

It can be understood that the communication system shown in FIG. 3A or FIG. 3B is merely used as an example, but is not intended to limit the technical solutions of this application. A person skilled in the art can understand that in a specific implementation process, the communication system shown in FIG. 3A or FIG. 3B may further include another device, and quantities of UEs, media delivery servers, and RTC servers may be determined depending on a specific requirement. This is not limited.

Optionally, each device (for example, a media delivery server or UE) in FIG. 3A or FIG. 3B in this embodiment of this application may be a general-purpose device or a dedicated device. This is not specifically limited in this embodiment of this application.

Optionally, related functions of the devices in FIG. 3A or FIG. 3B in this embodiment of this application may be implemented by one device, may be implemented by a plurality of devices together, or may be implemented by one or more functional modules in one device. This is not specifically limited in this embodiment of this application. It can be understood that the function may be an element in a hardware device, a software function running on dedicated hardware, a combination of hardware and software, or may be a virtualization function instantiated on a platform (for example, a cloud platform).

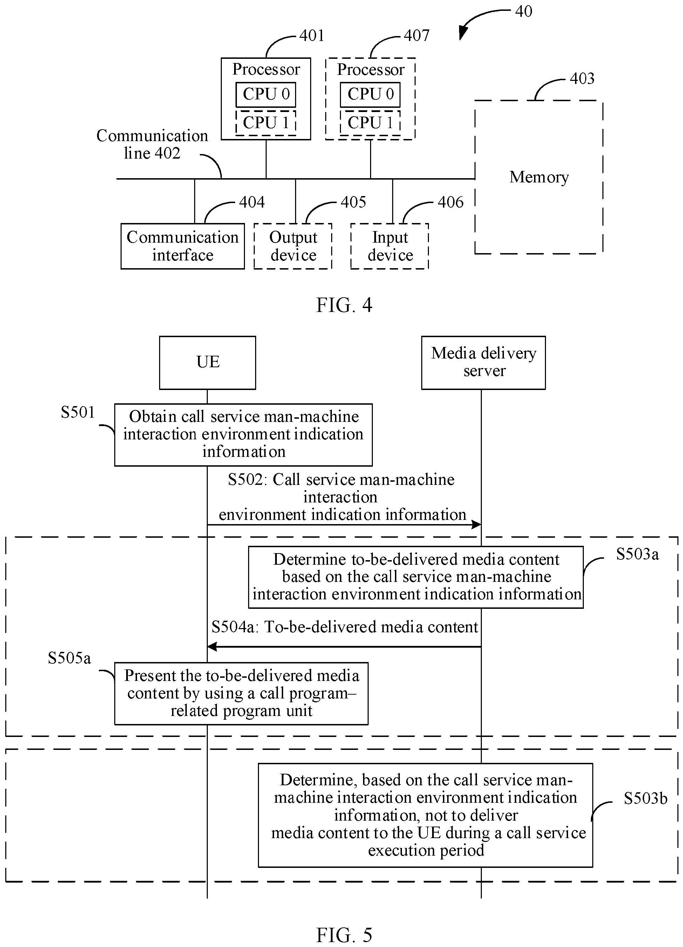

During specific implementation, all the devices in FIG. 3A or FIG. 3B may use a composition structure shown in FIG. 4, or include components shown in FIG. 4. FIG. 4 is a schematic diagram of a hardware structure of a device to which an embodiment of this application is applicable. The device 40 includes at least one processor 401 and at least one communication interface 404, configured to implement the methods provided in embodiments of this application. The device 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control execution of programs in the solutions of this application.

The communication line 402 may include a path, for example, a bus, for transmitting information between the foregoing components.

The communication interface 404 is configured to communicate with another device or a communication network. The communication interface 404 may be any transceiver-type apparatus, for example, an Ethernet interface, a radio access network (radio access network, RAN) interface, a wireless local area network (wireless local area network, WLAN) interface, a transceiver, a pin, a bus, or a transceiver circuit.

The memory 403 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), other optical disk storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of an instruction or a data structure and that can be accessed by a computer. However, no limitation is imposed thereto. The memory may exist independently, and is coupled to the processor 401 through the communication line 402. Alternatively, the memory 403 may be integrated with the processor 401. The memory provided in this embodiment of this application may generally be non-volatile.

The memory 403 is configured to store computer executable instructions for performing the solutions provided in embodiments of this application, and the processor 401 controls execution of the solutions. The processor 401 is configured to execute the computer executable instructions stored in the memory 403, to implement the methods provided in embodiments of this application. Optionally, in this embodiment of this application, the processor 401 may perform processing-related functions in methods provided in the following embodiments of this application, and the communication interface 404 is responsible for communicating with another device or a communication network. This is not specifically limited in this embodiment of this application.

Optionally, the computer executable instructions in this embodiment of this application may also be referred to as application program code. This is not specifically limited in this embodiment of this application.

Couplings in this embodiment of this application are indirect couplings or communication connections between apparatuses, units, or modules, may be in an electrical form, a mechanical from, or another form, and are used for information exchange between the apparatuses, the units, or the modules.

In an embodiment, the processor 401 may include one or more CPUs, for example, a CPU 0 and a CPU 1 in FIG. 4.

In an embodiment, the device 40 may include a plurality of processors, for example, the processor 401 and a processor 407 in FIG. 4. Each of the processors may be a single-core processor (single-CPU), or may be a multi-core processor (multi-CPU). The processor herein may be one or more devices, circuits, and/or processing cores configured to process data (for example, computer program instructions).

In an embodiment, the device 40 may further include an output device 405 and/or an input device 406. The output device 405 is coupled to the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 is coupled to the processor 401, and may receive a user input in a plurality of manners. For example, the input device 406 may be a mouse, a keyboard, a touchscreen device, or a sensing device.

It can be understood that the composition structure shown in FIG. 4 does not constitute any limitation on the device. In addition to the components shown in FIG. 4, the device may include more or fewer components than those shown in the figure, a combination of some components, or a different arrangement of the components.

With reference to the accompanying drawings, the following describes media content delivery methods provided in embodiments of this application. Devices in the following embodiments may include the components shown in FIG. 4. Details are not described again.

It can be understood that the media content delivery methods provided in embodiments of this application can be applied to a plurality of scenarios. For example, the media content delivery methods provided in embodiments of this application can be applied the following scenarios: during a period after calling UE calls called UE and before the called UE rings (that is, a period in which the calling UE initiates a call but the called UE has not ringed); in a ringing process (that is, a period in which a calling user hears a ring back tone); during the call (calling and called parties participate in a call process); during a period after the call ends (after the call between the calling and called parties ends, a period after one user hangs up and before the other user hangs up); and during a period after the call fails (a period after the calling UE calls the called UE, the called UE cannot be connected due to power-off, arrears, a poor network, or another reason, and before the calling user hangs up).

It can be noted that names of messages between the network elements, names of parameters in the messages, or the like in the following embodiments of this application are merely examples, and the names thereof during specific implementation may be other names. This is not specifically limited in embodiments of this application.

It can be noted that "and/or" in embodiments of this application may be used to indicate that associated objects have three relationships. For example, A and/or B may represent the following three cases: Only A exists, both A and B exist, and only B exists. A and B each may be in a singular or plural form. In addition, expressions similar to "at least one of A, B, and C" or "at least one of A, B, or C" are generally used to present any one of the following: Only A exists, only B exists, only C exists, both A and B exist, both A and C exist, both B and C exist, and A, B, and C all exist. The foregoing uses three elements A, B, and C as an example to illustrate optional items of the project. When there are more elements in an expression, meanings of the expression can be obtained according to the foregoing rules.

For ease of describing the technical solutions in embodiments of this application, in embodiments of this application, words such as "first" and "second" may be used to distinguish between technical features with same or similar functions. The words such as "first" and "second" are not used to limit a quantity and an execution sequence, and the words such as "first" and "second" are unnecessarily limited to be different. In embodiments of this application, words such as "example" or "for example" are used to indicate an example, an illustration, or a description, and any embodiment or design scheme described as "example" or "for example" cannot be construed as having more advantages over other embodiments or design schemes. Use of the words such as "example" or "for example" is intended to present a related concept in a specific manner for ease of understanding.

It can be noted that in embodiments of this application, for a type of technical features, technical features in this type of technical features are distinguished by using "first", "second", "third", "A", "B", "C", "D", and the like. There is no chronological order or size order for the technical features described by "first", "second", "third", "A", "B", "C", and "D".

It can be understood that in embodiments of this application, a same step, or steps or technical feature with a same function can be mutually referenced in different embodiments.

It can be understood that in embodiments of this application, UE and/or a media delivery server may perform some or all of the steps in embodiments of this application. These steps are merely examples. In embodiments of this application, other steps or variations of various steps may be alternatively performed. In addition, the steps may be performed in sequences different from those presented in embodiments of this application, and not all the steps in embodiments of this application may need to be performed.

FIG. 5 shows a media content delivery method according to an embodiment of this application. The media content delivery method includes S501 to S505a, or the media content delivery method includes S501, S502, and S503b.

S501: UE obtains call service man-machine interaction environment indication information.

The UE may be any UE in FIG. 3A or FIG. 3B. For example, the UE may be the UE 301 or the UE 302 in FIG. 3A, or the UE may be the UE 304 or the UE 305 in FIG. 3B.

In this embodiment of this application, the call service man-machine interaction environment indication information may indicate a man-machine interaction environment of a user corresponding to the UE during a call service execution period. The man-machine interaction environment can reflect a current status of the user, for example, whether the user gazes at a screen of the UE or whether the user is suitable for watching or listening to media content. Therefore, the call service man-machine interaction environment may be used by a media delivery server to determine whether media content is suitable for being delivered to the UE during the call service execution period. When media content is unsuitable for being delivered to the UE, the media delivery server may not deliver media content to the UE. The media delivery server delivers media content to the UE only when media content is suitable for being delivered to the UE. This improves user experience and delivery effect of the media content. Alternatively, the call service man-machine interaction environment may be used by the media delivery server to determine to-be-delivered media content. Because the to-be-delivered media content determined by the media delivery server is determined based on the current status of the user, the to-be-delivered media content meets a requirement of the user, so that user experience and delivery effect of the media content can be improved.

In an example, the man-machine interaction environment may include any one or any combination of the following: whether the screen of the UE is lit; whether an interface of a call program of the UE is visible; whether a hands-free function of the UE is enabled; whether a wired headset of the UE is inserted; whether a wireless headset of the UE is connected; or whether the user is within a visible range of the UE.

In this embodiment of this application, the call program may be an application program corresponding to a call service. An Android (Android) system is used as an example. The call program may be a telephony application (Telephony APP) on the UE or RTC software on the UE. The interface of the call program may be a graphical user interface (graphical user interface, GUI) of the call program. That the interface of the call program of the UE is visible may mean that the call program of the UE runs in a foreground. That the interface of the call program of the UE is invisible may mean that the call program of the UE runs in a background.

In this embodiment of this application, that the wired headset of the UE is inserted may mean that the UE is connected to the wired headset, and the UE may play sound by using the wired headset connected to the UE. That the wired headset of the UE is not inserted may mean that the UE is not connected to the wired headset, and the UE may play sound by using a loudspeaker of the UE. It can be noted that, that the wired headset of the UE is inserted but the wired headset is not used for a call service may also mean that the wired headset of the UE is not inserted.

In this embodiment of this application, that the wireless headset of the UE is connected may mean that the UE is connected to the wireless headset, and the UE may play sound by using the wireless headset connected to the UE. That the wireless headset of the UE is not connected may mean that the UE is not connected to the wireless headset, and the UE may play sound by using the loudspeaker of the UE. The wireless headset may be a Bluetooth headset or another Bluetooth device with a call function (for example, a smart band or a smartwatch). It can be noted that, that the wireless headset of the UE is connected but the wireless headset is not used for a call service may also mean that the wireless headset of the UE is not connected.

In this embodiment of this application, that the user is within the visible range of the UE may mean that the user is within a "field of view" range of the screen of the UE, or that the user can see the screen of the UE. That the user is out of the visible range of the UE may mean that the user is outside the "field of view" of the screen of the UE, or that the user cannot see the screen. It can be understood that if the user cannot see the screen, the user may talk by using a device, for example, the wired headset or the Bluetooth headset.

In a possible implementation, the call service man-machine interaction environment indication information may include a plurality of pieces of indication information, and each piece of indication information indicates one state included in the man-machine interaction environment.

For example, the man-machine interaction environment includes: whether the screen of the UE is lit, whether the interface of the call program of the UE is visible, and whether the hands-free function of the UE is enabled. The call service man-machine interaction environment indication information includes at least three pieces of indication information. 1^{st} indication information may indicate whether the screen of the UE is lit, 2^{nd} indication information may indicate whether the interface of the call program of the UE is visible, and 3^{rd} indication information may indicate whether the hands-free function of the UE is enabled.

In a possible implementation, when the call service is about to start or when the call service has started, the UE obtains the call service man-machine interaction environment indication information. The call process shown in FIG. 1A and FIG. 1B is used as an example, and S501 may be performed before S125. The call process shown in FIG. 2A and FIG. 2B is used as an example, and S501 may be performed before S222.

In a possible implementation, the UE may obtain the call service man-machine interaction environment indication information by calling an application programming interface (application programming interface, API) provided by an operating system of the UE. Optionally, after user authorization, the UE obtains the call service man-machine interaction environment indication information by calling the API provided by the operating system of the UE.

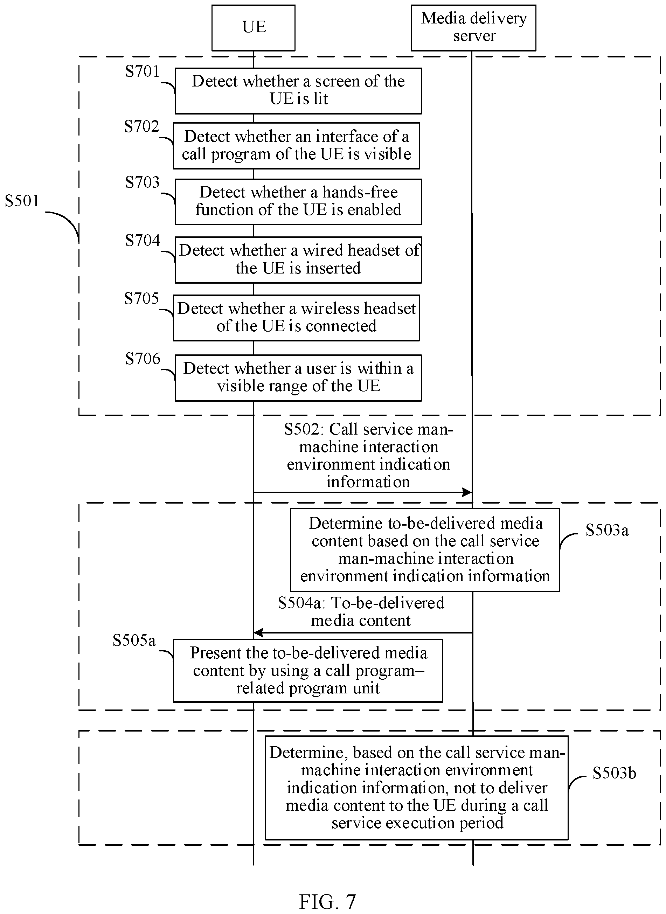

It can be understood that for different operating systems (for example, Android, iOS, or HarmonyOS) or for different versions of one operating system, processes in which the UE obtains the call service man-machine interaction environment indication information by calling the API provided by the operating system of the UE are different. Android is used as an example for description in this embodiment of this application. For details, refer to the following descriptions in the method shown in FIG. 7. Details are not described herein.

S502: The UE sends the call service man-machine interaction environment indication information to the media delivery server. Correspondingly, the media delivery server receives the call service man-machine interaction environment indication information sent by the UE.

In this embodiment of this application, if the UE is the UE 301 or the UE 302 in FIG. 3A, the media delivery server may be the media delivery server 303 in FIG. 3A. If the UE is the UE 304 or the UE 305 in FIG. 3B, the media delivery server may be the media delivery server 306 in FIG. 3B. The following separately uses examples in which the media delivery server is the media delivery server 303 in FIG. 3A and the media delivery server is the media delivery server 306 in FIG. 3B, to describe a specific process of S502.

Example 1: The media delivery server is the media delivery server 303 in FIG. 3A.

In a possible implementation, that the UE sends the call service man-machine interaction environment indication information to the media delivery server includes: The UE sends a SIP-info message to the media delivery server. The SIP-info message includes the call service man-machine interaction environment indication information. In other words, the UE may send the call service man-machine interaction environment indication information to the media delivery server by extending the SIP-info message.

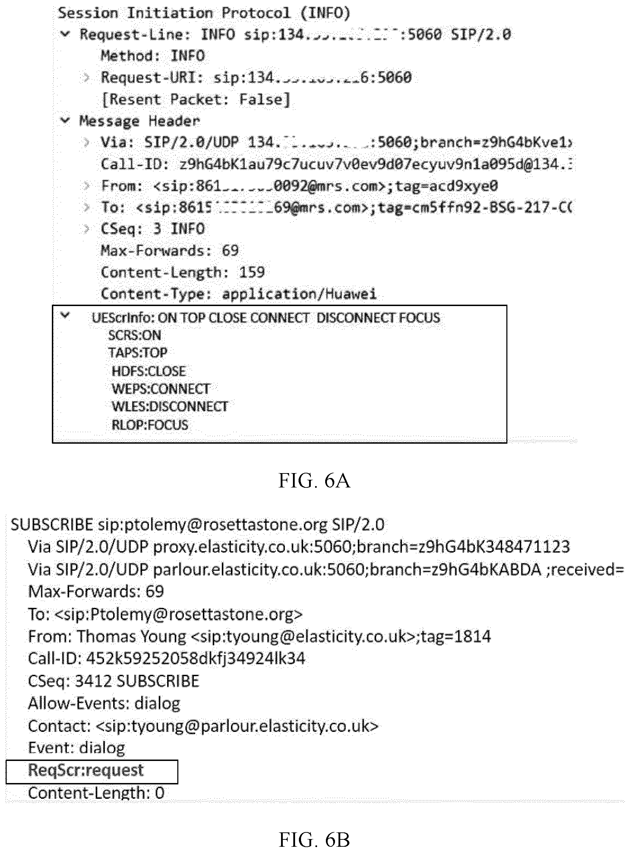

For example, UEScrInfo parameters may be extended in a messenger header, and the UEScrInfo parameters include parameters such as SCRS, TAPS, HDFS, WEPS, WLES, and RLOP as extended parameters for padding, to implement functions of the call service man-machine interaction environment indication information. The SCRS may indicate whether the screen of the UE is lit. The TAPS may indicate whether the interface of the call program of the UE is visible. The HDFS may indicate whether the hands-free function of the UE is enabled. The WEPS may indicate whether the wired headset of the UE is inserted. The WLES may indicate whether the wireless headset of the UE is connected. The RLOP may indicate whether the user is within the visible range of the UE. If the UEScrInfo parameters are shown in FIG. 6A, the UEScrInfo parameters may indicate that the screen of the UE is lit, the interface of the call program of the UE is visible, the hands-free function of the UE is disabled, the wired headset of the UE is inserted, the wireless headset of the UE is not connected, and the user is within the visible range of the UE.

In another possible implementation, that the UE sends the call service man-machine interaction environment indication information to the media delivery server includes: The UE sends a session initiation protocol notification (SIP-Notification) message to the media delivery server. The SIP-Notification message includes the call service man-machine interaction environment indication information. In this case, before S502, the UE may receive a subscription (SIP-Subscribe) message from the media delivery server. The subscription message may be used to subscribe to the call service man-machine interaction environment indication information. In other words, the media delivery server may subscribe to the call service man-machine interaction environment indication information from the UE, and after the subscription, the UE may send the call service man-machine interaction environment indication information to the media delivery server.

For example, the media delivery server may subscribe to the call service man-machine interaction environment indication information from the UE by extending the SIP-Subscribe message. For example, as shown in FIG. 6B, a parameter ReqScr:request for subscribing to the call service man-machine interaction environment indication information is added to a message header of the SIP-Subscribe message, to implement a function of subscribing to the call service man-machine interaction environment indication information from the UE.

For example, the UE may send the call service man-machine interaction environment indication information to the media delivery server by extending the SIP-Notification message. For example, UEScrInfo parameters are extended in a message header of the SIP-Notification message, and the UEScrInfo parameters include parameters such as SCRS, TAPS, HDFS, WEPS, WLES, and RLOP as extended parameters for padding, to implement functions of the call service man-machine interaction environment indication information. For descriptions of the UEScrInfo parameters, refer to the descriptions in the foregoing possible implementation.

As described above, the functions of the media delivery server 303 may be jointly deployed on one physical device, or may be deployed on a plurality of physical devices. The communication system shown in FIG. 3A is used as an example. If the functions of the media delivery server 303 are jointly deployed on one physical device, the UE sends the call service man-machine interaction environment indication information to the media application module 3032. Correspondingly, the media application module 3032 receives the call service man-machine interaction environment indication information sent by the UE. Subsequently, the media application module 3032 may send the call service man-machine interaction environment indication information to the media decision module 3031.

If the functions of the media delivery server 303 are deployed on a plurality of physical devices, the UE sends the call service man-machine interaction environment indication information to the Media AS. Correspondingly, the Media AS receives the call service man-machine interaction environment indication information sent by the UE. The indication information may be included in the SIP-info message or the SIP-Notification message. Subsequently, the Media AS may send the call service man-machine interaction environment indication information to the media decision server. The procedure shown in FIG. 1A and FIG. 1B is used as an example. The Media AS may send the call service man-machine interaction environment indication information to the media decision server by using the request message in S125, that is, the call service man-machine interaction environment indication information may be included in the request message in S125.

Example 2: The media delivery server is the media delivery server 306 in FIG. 3B.

In a possible implementation, that the UE sends the call service man-machine interaction environment indication information to the media delivery server includes: The UE sends a request message for requesting media content to the media delivery server. The request message for requesting media content includes the call service man-machine interaction environment indication information. In an example, the request message for requesting media content is the request message in S222.

In a possible implementation, the UE communicates with the media delivery server by using a hypertext transfer protocol (hypertext transfer protocol, HTTP) or a hypertext transfer protocol over secure socket layer (hypertext transfer protocol over secure socket layer, HTTPS). In an example, the call service man-machine interaction environment indication information included in the request message for requesting media content may be in extensible markup language (extensible markup language, xml) or JavaScript object notation (JavaScript object notation, JSON) format, or the like. If the call service man-machine interaction environment indication information is in xml format, the call service man-machine interaction environment indication information may be described as follows:

```
          <ScreenContext>
                <SCRS Value="ON"/>
                <TAPS Value="TOP"/>
                <HDFS Value="CLOSE"/>
                <WEPS Value="CONNECT"/>
                <WLES Value="CONNECT"/>
                <RLPO Value="FOCUS"/>
                      </ScreenContext>
```

If the call service man-machine interaction environment indication information is in JSON format, the call service man-machine interaction environment indication information may be described as follows:

```
          "ScreenContext" :
          {
                "SCRS":"ON",
                "TAPS": "TOP",
                "HDFS": "CLOSE",
                "WEPS": "CONNECT",
                "WLES": "CONNECT",
                "RLPO" : "FOCUS"
          }
```

It can be understood that the foregoing call service man-machine interaction environment indication information in xml format or JSON format indicates that the screen of the UE is lit, the interface of the call program of the UE is visible, the hands-free function of the UE is disabled, the wired headset of the UE is inserted, the wireless headset of the UE is connected, and the user is within the visible range of the UE.

As described above, the functions of the media delivery server 306 may be jointly deployed on one physical device, or may be deployed on a plurality of physical devices. The communication system shown in FIG. 3B is used as an example. If the functions of the media delivery server 306 are jointly deployed on one physical device, the UE sends the call service man-machine interaction environment indication information to the media decision module 3061. Correspondingly, the media decision module 3061 receives the call service man-machine interaction environment indication information sent by the UE. If the functions of the media delivery server 306 are deployed on a plurality of physical devices, the UE sends the call service man-machine interaction environment indication information to the media decision server. Correspondingly, the media decision server receives the call service man-machine interaction environment indication information sent by the UE. The procedure shown in FIG. 2A and FIG. 2B is used as an example. The UE may send the call service man-machine interaction environment indication information to the media decision server by using the request message in S222, that is, the call service man-machine interaction environment indication information may be included in the request message in S222.

It can be understood that the call service man-machine interaction environment indication information is sent by using the request message for requesting media content. Alternatively, an SDP offer message in the conventional technology may be extended, and the call service man-machine interaction environment indication information may be sent by using an extended SDP offer message.

S503a: The media delivery server determines the to-be-delivered media content based on the call service man-machine interaction environment indication information.

In a possible implementation, the media delivery server may directly determine the to-be-delivered media content based on the call service man-machine interaction environment indication information. Alternatively, the media delivery server may determine a media form based on the call service man-machine interaction environment indication information, and determine media content conforming to the media form as the to-be-delivered media content. Alternatively, the media delivery server may determine a group type of the user based on the call service man-machine interaction environment indication information, and determine the to-be-delivered media content based on the group type. The following separately describes the foregoing three cases.

Case 1: The media delivery server directly determines the to-be-delivered media content based on the call service man-machine interaction environment indication information.

In the case 1, the to-be-delivered media content may be media content in which media information is transmitted by using a voice or media content in which information is transmitted by using an image. For descriptions of the media content in which the media information is transmitted by using the voice or the media content in which the information is transmitted by using the image, refer to the foregoing interpretations and descriptions of related technical terms in embodiments of this application. Details are not described herein again.

It can be understood that the media delivery server may determine, based on different call service man-machine interaction environments, to-be-delivered media content corresponding to the call service man-machine interaction environments. For example, if the call service man-machine interaction environment is suitable for the user to listen to sound played by the UE, the media delivery server may determine that the to-be-delivered media content is the media content in which the media information is transmitted by using the voice. If the call service man-machine interaction environment is suitable for the user to watch a video played by the UE, the media delivery server may determine that the to-be-delivered media content is the media content in which the media information is transmitted by using the image. In this way, media content suitable for the user can be delivered to the UE, so that user experience and the delivery effect of the media content can be improved.

In a possible implementation, the determining, by the media delivery server, the to-be-delivered media content based on the call service man-machine interaction environment indication information includes: if any one of the following holds true, determining that the to-be-delivered media content is the media content in which the media information is transmitted by using the voice: the call service man-machine interaction environment indication information indicates that the screen of the UE is off; or the call service man-machine interaction environment indication information indicates that the screen of the UE is lit and the interface of the call program of the UE is invisible; or the call service man-machine interaction environment indication information indicates that the screen of the UE is lit, the wired headset of the UE is inserted, and the user is out of the visible range of the UE; or the call service man-machine interaction environment indication information indicates that the screen of the UE is lit, the wireless headset of the UE is connected, and the user is out of the visible range of the UE.

In an example, if the man-machine interaction environment indicated by the call service man-machine interaction environment indication information is described in Table 1, the media delivery server determines that the to-be-delivered media content is the media content in which the media information is transmitted by using the voice. In this embodiment of this application, "/" indicates that any state is possible, or the call service man-machine interaction environment indication information does not indicate the state. Unified descriptions are provided herein, and are not described below. It can be learned from Table 1 that if the screen of the UE is not lit, it indicates that the user may not want to look at the screen. Therefore, the call service man-machine interaction environment is suitable for the user to listen to sound played by the UE, and the media delivery server may determine that the to-be-delivered media content is the media content in which the media information is transmitted by using the voice. If the screen of the UE is lit and the interface of the call program of the UE is invisible, it indicates that the user is performing an operation on another application program. Although the user may gaze at the screen, it is inconvenient to visually disturb the user. Therefore, the call service man-machine interaction environment is suitable for the user to listen to sound played by the UE, and the media delivery server may determine that the to-be-delivered media content is the media content in which the media information is transmitted by using the voice. If the screen of the UE is lit, the wired headset of the UE is inserted (or the wireless headset of the UE is connected), and the user is out of the visible range of the UE, there is a low probability that the user gazes at the screen. Therefore, the call service man-machine interaction environment is suitable for the user to listen to sound played by the UE, and the media delivery server may determine that the to-be-delivered media content is the media content in which the media information is transmitted by using the voice.

**Table 1**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| No | / | / | / | / | / | The user may not want to look at the screen. |
| Yes | No | / | / | / | / | The user is performing an operation on another application program. Although the user may gaze at the screen, it is inconvenient to visually disturb the user. |
| Yes | / | / | Yes | / | No | There is a low probability that the user gazes at the screen. |
| Yes | / | / | / | Yes | No | There is a low probability that the user gazes at the screen. |

In a possible implementation, the determining, by the media delivery server, the to-be-delivered media content based on the call service man-machine interaction environment indication information includes: if any one of the following holds true, determining that the to-be-delivered media content is the media content in which the information is transmitted by using the image: the call service man-machine interaction environment indication information indicates that the screen of the UE is lit, the interface of the call program of the UE is visible, and the hands-free function of the UE is disabled; or the call service man-machine interaction environment indication information indicates that the screen of the UE is lit, the interface of the call program of the UE is visible, and the hands-free function of the UE is enabled. For details, refer to Table 2.

**Table 2**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| Yes | Yes | No | / | / | / | The call program runs in the foreground, and the user may gaze at the screen. |
| Yes | Yes | Yes | / | / | / | The call program runs in the foreground, and the user may gaze at the screen. |

Case 2: The media delivery server may determine the media form based on the call service man-machine interaction environment indication information, and determine the media content conforming to the media form as the to-be-delivered media content.

For descriptions of the media form in the case 2, refer to the foregoing interpretations and descriptions of related technical terms in embodiments of this application. Details are not described herein again.

It can be understood that the media delivery server may determine, based on different call service man-machine interaction environments, media forms corresponding to the call service man-machine interaction environments. For example, if the call service man-machine interaction environment is suitable for the user to listen to sound played by the UE, the media delivery server may determine that the media form is an audio form. If the call service man-machine interaction environment is suitable for the user to watch a video played by the UE, the media delivery server may determine that the media form is an audible video form. If the call service man-machine interaction environment is suitable for the user to watch a video played by the UE, but the call service man-machine interaction environment is unsuitable for the UE to play external sound, the media delivery server may determine that the media form is a silent video form. If the call service man-machine interaction environment is suitable for the user to watch a video played by the UE, but the call service man-machine interaction environment is unsuitable for the UE to play excessively high external sound, the media delivery server may determine that the media form is a low-volume video form. Subsequently, the media delivery server determines the media content conforming to the media form as the to-be-delivered media content. In this way, media content suitable for the user can be delivered to the UE, so that user experience and the delivery effect of the media content are improved. In addition, when the call service man-machine interaction environment is suitable for the user to listen to sound played by the UE, media content in a video form is not delivered to the UE. This can reduce or avoid consumption of data traffic of the UE and reduce occupied air interface resources while improving user experience.

In a possible implementation, the determining, by the media delivery server, a media form based on the call service man-machine interaction environment indication information includes: if any one of the following holds true, determining that the media form is the audio form: the call service man-machine interaction environment indication information indicates that the screen of the UE is off; or the call service man-machine interaction environment indication information indicates that the screen of the UE is lit and the interface of the call program of the UE is invisible; or the call service man-machine interaction environment indication information indicates that the screen of the UE is lit, the wired headset of the UE is inserted, and the user is out of the visible range of the UE; or the call service man-machine interaction environment indication information indicates that the screen of the UE is lit, the wireless headset of the UE is connected, and the user is out of the visible range of the UE.

In an example, if the man-machine interaction environment indicated by the call service man-machine interaction environment indication information is described in Table 3, the media delivery server determines that the media form is the audio form. It can be learned from Table 3 that if the screen of the UE is not lit, it indicates that the user may not want to look at the screen. Therefore, the call service man-machine interaction environment is suitable for the user to listen to sound played by the UE, and the media delivery server may determine that the media form is the audio form. If the screen of the UE is lit and the interface of the call program of the UE is invisible, it indicates that the user is performing an operation on another application program. Although the user may gaze at the screen, it is inconvenient to visually disturb the user. Therefore, the call service man-machine interaction environment is suitable for the user to listen to sound played by the UE, and the media delivery server may determine that the media form is the audio form. If the screen of the UE is lit, the wired headset of the UE is inserted (or the wireless headset of the UE is connected), and the user is out of the visible range of the UE, there is a low probability that the user gazes at the screen. Therefore, the call service man-machine interaction environment is suitable for the user to listen to sound played by the UE, and the media delivery server may determine that the media form is the audio form.

**Table 3**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| No | / | / | / | / | / | The user may not want to look at the screen. |
| Yes | No | / | / | / | / | The user is performing an operation on another application program. Although the user may gaze at the screen, it is inconvenient to visually disturb the user. Otherwise, the user operation may be interrupted. |
| Yes | / | / | Yes | / | No | There is a low probability that the user gazes at the screen. |
| Yes | / | / | / | Yes | No | There is a low probability that the user gazes at the screen. |

In a possible implementation, the determining, by the media delivery server, a media form based on the call service man-machine interaction environment indication information includes: if any one of the following holds true, determining that the media form is the audible video form: the call service man-machine interaction environment indication information indicates that the screen of the UE is lit, the interface of the call program of the UE is visible, and the wired headset of the UE is inserted; or the call service man-machine interaction environment indication information indicates that the screen of the UE is lit, the interface of the call program of the UE is visible, and the wireless headset of the UE is connected; or the call service man-machine interaction environment indication information indicates that the screen of the UE is lit, the interface of the call program of the UE is visible, the wireless headset of the UE is connected, and the user is within the visible range of the UE; or the call service man-machine interaction environment indication information indicates that the screen of the UE is lit, the interface of the call program of the UE is visible, the wired headset of the UE is inserted, and the user is within the visible range of the UE. For details, refer to Table 4.

**Table 4**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| Yes | Yes | / | Yes | / | / | The call program runs in the foreground, and the user talks by using the wired headset. In this case, there is a high probability that the user gazes at the screen. This is both visually and aurally convenient. |
| Yes | Yes | / | / | Yes | / | The call program runs in the foreground, and the user talks by using the wireless headset. In this case, there is a high probability that the user gazes at the screen. This is both visually and aurally convenient. |
| Yes | Yes | / | Yes | / | Yes | The call program runs in the foreground, the user talks by using the wired headset, and the user is within the visible range of the UE. In this case, there is a high probability that the user gazes at the screen. This is both visually and aurally convenient. |
| Yes | Yes | / | / | Yes | Yes | The call program runs in the foreground, the user talks by using the wireless headset, and the user is within the visible range of the UE. In this case, there is a high probability that the user gazes at the screen. This is both visually and aurally convenient. |

In a possible implementation, the determining, by the media delivery server, a media form based on the call service man-machine interaction environment indication information includes: if the call service man-machine interaction environment indication information indicates that the screen of the UE is lit, the interface of the call program of the UE is visible, and the hands-free function of the UE is enabled, determining that the media form is the silent video form. For details, refer to Table 5.

**Table 5**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| Yes | Yes | Yes | / | / | / | The call program runs in the foreground, and the user talks in hands-free mode. In this case, there is a high probability that the user gazes at the screen, but external sound of the UE is played. This may affect the environment. |

In a possible implementation, the determining, by the media delivery server, a media form based on the call service man-machine interaction environment indication information includes: if any one of the following holds true, determining that the media form is the low-volume video form: the call service man-machine interaction environment indication information indicates that the wired headset of the UE is inserted; or the call service man-machine interaction environment indication information indicates that the wireless headset of the UE is connected; or the call service man-machine interaction environment indication information indicates that the screen of the UE is lit, the interface of the call program of the UE is visible, the hands-free function of the UE is disabled, the wired headset of the UE is not inserted, the wireless headset of the UE is not connected, and the user is within the visible range of the UE. For details, refer to Table 6.

**Table 6**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| / | / | / | Yes | / | / | The user is using the wired headset. To avoid impact of loud sound on the user's ears, the media format is the low-volume video form. |
| / | / | / | / | Yes | / | The user is using the wireless headset. To avoid impact of loud sound on the user's ears, the media format is the low-volume video form. |
| Yes | Yes | No | No | No | Yes | The user may be close to the screen. To avoid impact of loud sound on the user's ears, the media format is the low-volume video form. |

Case 3: The media delivery server may determine the group type of the user based on the call service man-machine interaction environment indication information, and determine the to-be-delivered media content based on the group type.

In this embodiment of this application, the group type may be determined based on an age of the user. For example, the group type includes a first type of group, and the first type of group may be a youth group. An age of the youth group is greater than or equal to a first value and less than or equal to a second value. The first value and the second value are positive integers, and the first value is less than the second value. For example, the age of the youth group is greater than 18 years or less than or equal to 40 years.

It can be understood that the media delivery server may determine, based on different call service man-machine interaction environments, group types corresponding to the call service man-machine interaction environments. For example, if the call service man-machine interaction environment is an environment suitable for the youth group, the media delivery server may determine that the group type of the user is the youth group. Subsequently, the media delivery server determines the media content conforming to the group type as the to-be-delivered media content. In this way, the media content suitable for the group to which the user belongs can be delivered to the UE, to improve user experience and the delivery effect of the media content.

In a possible implementation, the determining, by the media delivery server, the group type of the user based on the call service man-machine interaction environment indication information includes: if any one of the following holds true, determining that the group type of the user is the first type of group: the call service man-machine interaction environment indication information indicates that the wired headset of the UE is inserted; or the call service man-machine interaction environment indication information indicates that the wireless headset of the UE is connected. For details, refer to Table 7.

**Table 7**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| / | / | / | Yes | / | / | The user uses the wired headset, and there is a high probability that the user belongs to the first type of group. |
| / | / | / | / | Yes | / | The user uses the wired headset, and there is a high probability that the user belongs to the first type of group. |

It can be understood that Table 1 to Table 7 are merely examples in which the media delivery server determines the to-be-delivered media content based on the call service man-machine interaction environment indication information. In specific application, there may be alternatively another case in which the media delivery server determines the to-be-delivered media content based on the call service man-machine interaction environment indication information. This is not specifically limited in this embodiment of this application.

It can be understood that in S503a, the media delivery server determines the to-be-delivered media content based on the call service man-machine interaction environment indication information, or may determine the to-be-delivered media content based on both the call service man-machine interaction environment indication information and some other information (current time, a label attribute of the user, and the like), so that the to-be-delivered media content is more suitable for the user.

In the case 1 to the case 3, if the media delivery server is the media delivery server 303 in FIG. 3A, and the functions of the media delivery server are jointly deployed on one physical device, the media decision module 3031 determines the to-be-delivered media content based on the call service man-machine interaction environment indication information. If the media delivery server is the media delivery server 303 in FIG. 3A, and the functions of the media delivery server are deployed on a plurality of physical devices, the media decision server determines the to-be-delivered media content based on the call service man-machine interaction environment indication information.

In the case 1 to the case 3, if the media delivery server is the media delivery server 306 in FIG. 3B, and the functions of the media delivery server are jointly deployed on one physical device, the media decision module 3061 determines the to-be-delivered media content based on the call service man-machine interaction environment indication information. If the media delivery server is the media delivery server 306 in FIG. 3B, and the functions of the media delivery server are deployed on a plurality of physical devices, the media decision server determines the to-be-delivered media content based on the call service man-machine interaction environment indication information.

S504a: The media delivery server delivers the to-be-delivered media content to the UE during the call service execution period. Correspondingly, the UE receives the to-be-delivered media content sent by the media delivery server.

In a possible implementation, the media delivery server sends the to-be-delivered media content to the UE through a media channel during the call service execution period. For descriptions of the media channel, refer to the foregoing interpretations and descriptions of related technical terms in embodiments of this application. Details are not described herein again.

It can be understood that the media channel may be established before S503a or after S503a. If the media channel is established before S503a, the media delivery server may establish the media channel based on the call service before S503a. For example, the media delivery server establishes an audio media channel if the call service is a voice call service, or the media delivery server establishes a video media channel if the call service is a video call service. Subsequently, after the media delivery server determines the to-be-delivered media content (that is, after S503a is performed), if the media channel determined by the media delivery server is capable of being used to transmit the to-be-delivered media content, the media delivery server sends the to-be-delivered media content to the UE through the media channel. If the media channel determined by the media delivery server is incapable of being used to transmit the to-be-delivered media content, the media delivery server performs switching on the media channel, and sends the to-be-delivered media content to the UE through a switched media channel.

For example, if the media channel determined by the media delivery server is an audio media channel (or a video media channel), and the media form of the to-be-delivered media content is an audio form (or a video form) (that is, the media channel determined by the media delivery server is capable of being used to transmit the to-be-delivered media content), the media delivery server sends the to-be-delivered media content to the UE through the media channel.

For example, if the media channel determined by the media delivery server is an audio media channel, but the media form of the to-be-delivered media content is not an audio form (that is, the media channel determined by the media delivery server is incapable of being used to transmit the to-be-delivered media content), the media delivery server switches the audio media channel to a video media channel, and sends the to-be-delivered media content to the UE through the video media channel.

For example, if the media channel determined by the media delivery server is a video media channel, but the media form of the to-be-delivered media content is not a video form (that is, the media channel determined by the media delivery server is incapable of being used to transmit the to-be-delivered media content), the media delivery server switches the video media channel to an audio media channel, and sends the to-be-delivered media content to the UE through the audio media channel.

It can be understood that if the media channel is established after S503a, the media delivery server may establish the media channel based on the to-be-delivered media content. For example, the media delivery server establishes an audio media channel if the media form of the to-be-delivered media content is an audio form, or the media delivery server establishes a video media channel if the media form of the to-be-delivered media content is a video form.

It can be understood that after delivery of the to-be-delivered media content ends, if the media channel used to transmit the to-be-delivered media content can be used for the call service, the UE performs the call service with another UE through the media channel used to transmit the to-be-delivered media content. If the media channel used to transmit the to-be-delivered media content cannot be used for the call service, the UE performs switching on the media channel, and performs the call service with another UE through the switched media channel.

For example, if the media channel used to transmit the to-be-delivered media content is an audio media channel (or a video media channel), and the call service is a voice call service (or a video call service) (that is, the media channel used to transmit the to-be-delivered media content can be used for the call service), the UE performs the call service with the another UE through the media channel used to transmit the to-be-delivered media content.

For example, if the media channel used to transmit the to-be-delivered media content is an audio media channel, but the call service is a video call service (that is, the media channel used to transmit the to-be-delivered media content cannot be used for the call service), the UE switches the audio media channel to a video media channel, and performs the call service with the another UE through the video media channel.

For example, if the media channel used to transmit the to-be-delivered media content is a video media channel, but the call service is an audio call service (that is, the media channel used to transmit the to-be-delivered media content cannot be used for the call service), the UE switches the video media channel to an audio media channel, and performs the call service with the another UE through the audio media channel.

In a possible implementation, in S504a, if the media delivery server is the media delivery server 303 in FIG. 3A, and the functions of the media delivery server are jointly deployed on one physical device, the media decision module 3031 sends information about the to-be-delivered media content to the media application module 3032 after determining the to-be-delivered media content. After receiving the information about the to-be-delivered media content, the media application module 3032 sends an info message to the media resource management module 3033, to control the media resource management module 3033 to deliver the to-be-delivered media content to the UE.

In a possible implementation, if the media delivery server is the media delivery server 303 in FIG. 3A, and the functions of the media delivery server are deployed on a plurality of physical devices, the media decision server sends information about the to-be-delivered media content to the Media AS after determining the to-be-delivered media content. After receiving the information about the to-be-delivered media content, the Media AS sends an info message to the MRS, to control the MRS to deliver the to-be-delivered media content to the UE. If the procedure shown in FIG. 1A and FIG. 1B is used as an example, S504a may be corresponding to S126 and S127.

It can be understood that in the foregoing two possible implementations, the information about the to-be-delivered media content may indicate the to-be-delivered media content.

In a possible implementation, in S504a, if the media delivery server is the media delivery server 306 in FIG. 3B, and the functions of the media delivery server are jointly deployed on one physical device, the media decision module 3061 sends an address of the to-be-delivered media content to the UE after determining the to-be-delivered media content. After receiving the address of the to-be-delivered media content, the UE requests the to-be-delivered media content from the media resource management module 3062, so that the media resource management module 3062 delivers the to-be-delivered media content to the UE. Alternatively, after determining the to-be-delivered media content, the media decision module 3061 controls the media resource management module 3062 to deliver the to-be-delivered media content to the UE. For example, the media decision module 3061 controls the media resource management module 3062 to send a response message of the request message for requesting media content to the UE. The response message includes the to-be-delivered media content.

In a possible implementation, in S504a, if the media delivery server is the media delivery server 306 in FIG. 3B, and the functions of the media delivery server are deployed on a plurality of physical devices, the media decision server sends an address of the to-be-delivered media content to the UE after determining the to-be-delivered media content. After receiving the address of the to-be-delivered media content, the UE requests the to-be-delivered media content from the MRS, so that the MRS delivers the to-be-delivered media content to the UE. If the procedure shown in FIG. 2A and FIG. 2B is used as an example, S504a may be corresponding to S224 to S226.

S505a: The UE presents the to-be-delivered media content by using a call program-related program unit.

In this embodiment of this application, the call program-related program unit may be at least one process or at least one thread of the call program. The call program-related program unit may have an interface or may have no interface. If the call program-related program unit has an interface, the interface may occupy the entire screen of the UE (for example, the interface is a full-screen window), or the interface may not occupy the entire screen of the UE (for example, the interface is a suspension window, and may be suspended on a home screen of the UE, or may be suspended on an interface of an application program running in the foreground of the UE). The interface may be the interface of the call program or may not be the interface of the call program (for example, an interface that pops up through triggering by a related application program after the UE receives the to-be-delivered media content). If the call program-related program unit has no interface, the call program-related program unit may be a background process or a background thread.

In this embodiment of this application, that the UE presents the to-be-delivered media content by using a call program-related program unit may also be described as: The UE plays the to-be-delivered media content by using the call program-related program unit.

According to S501 to S505a, the UE may send the call service man-machine interaction environment indication information to the media delivery server, so that the media delivery server can determine the to-be-delivered media content based on the indication information. The man-machine interaction environment indicated by the call service man-machine interaction environment indication information can reflect the current status of the user, for example, whether the user gazes at the screen of the UE or whether the user is suitable for watching or listening to media content. Therefore, the to-be-delivered media content determined based on the call service man-machine interaction environment indication information better meets the requirement of the user, so that user experience and the delivery effect of the media content can be improved.

In this embodiment of this application, S503a to S505a may be replaced with S503b.

S503b: The media delivery server determines, based on the call service man-machine interaction environment indication information, not to deliver media content to the UE during the call service execution period.

It can be understood that the media delivery server may determine, based on different call service man-machine interaction environments, whether to deliver media content to the UE during the call service execution period. For example, if the call service man-machine interaction environment is suitable for delivering media content, the media delivery server may determine to deliver media content to the UE during the call service execution period. If the call service man-machine interaction environment is unsuitable for delivering media content, the media delivery server may determine not to deliver media content to the UE during the call service execution period. In this way, when the call service man-machine interaction environment is unsuitable for delivering media content, media content may not be delivered to the UE. This can reduce or avoid consumption of data traffic of the UE and reduce occupied air interface resources while improving user experience.

In a possible implementation, the determining, by the media delivery server based on the call service man-machine interaction environment indication information, not to deliver media content to the UE during the call service execution period includes: if any one of the following holds true, determining not to deliver media content to the UE during the call service execution period: the call service man-machine interaction environment indication information indicates that the screen of the UE is off; or the call service man-machine interaction environment indication information indicates that the screen of the UE is lit and the interface of the call program of the UE is invisible; or the call service man-machine interaction environment indication information indicates that the screen of the UE is lit, the wired headset of the UE is inserted, and the user is out of the visible range of the UE; or the call service man-machine interaction environment indication information indicates that the screen of the UE is lit, the wireless headset of the UE is connected, and the user is out of the visible range of the UE. For details, refer to Table 8.

**Table 8**

| Whether the screen of the UE is lit | Whether the interface of the call program of the UE is visible | Whether the hands-free function of the UE is enabled | Whether the wired headset of the UE is inserted | Whether the wireless headset of the UE is connected | Whether the user is within the visible range of the UE | Meaning of the call service man-machine interaction environment indication information |
|---|---|---|---|---|---|---|
| No | / | / | / | / | / | The user has not lit the screen, and therefore the user may not want to receive media content. |
| Yes | No | / | / | / | / | The user is performing an operation on another application program, and therefore the user may not want to receive media content. |
| Yes | / | / | Yes | / | No | There is a low probability that the user gazes at the screen, and therefore the user may not want to receive media content. |
| Yes | / | / | / | Yes | No | There is a low probability that the user gazes at the screen, and therefore the user may not want to receive media content. |

It can be understood that Table 8 is merely an example in which the media delivery server determines, based on the call service man-machine interaction environment indication information, not to deliver media content to the UE during the call service execution period. In specific application, there may be alternatively another case in which the media delivery server determines, based on the call service man-machine interaction environment indication information, not to deliver media content to the UE during the call service execution period. This is not specifically limited in this embodiment of this application.

Optionally, after S503b, the media delivery server may send first indication information to the UE, where the first indication information indicates not to deliver media content to the UE during the call service execution period. After receiving the first indication information, the UE determines, based on the first indication information, not to present media content.

In a possible implementation, if the media delivery server is the media delivery server 303 in FIG. 3A, and the functions of the media delivery server are jointly deployed on one physical device, the media decision module 3031 may determine not to deliver media content to the UE during the call service execution period. Subsequently, the media decision module 3031 may send the first indication information to the UE through the media application module 3032. If the media delivery server is the media delivery server 303 in FIG. 3A, and the functions of the media delivery server are deployed on a plurality of physical devices, the media decision server may determine not to deliver media content to the UE during the call service execution period. Subsequently, the media decision server may send the first indication information to the Media AS. After receiving the first indication information, the Media AS sends the first indication information to the UE.

In a possible implementation, if the media delivery server is the media delivery server 306 in FIG. 3B, and the functions of the media delivery server are jointly deployed on one physical device, the media decision module 3061 may determine not to deliver media content to the UE during the call service execution period. Subsequently, the media decision module 3061 may send a response message of the request message for requesting media content to the UE, where the response message includes the first indication information. If the media delivery server is the media delivery server 306 in FIG. 3B, and the functions of the media delivery server are deployed on a plurality of physical devices, the media decision server may determine not to deliver media content to the UE during the call service execution period. Subsequently, the media decision server may send a response message of the request message for requesting media content to the UE, where the response message includes the first indication information.

It can be understood that, after S503b, the media delivery server may alternatively not send the first indication information to the UE, that is, the media delivery server may not give, to the UE, an indication that media content is not to be delivered to the UE during the call service execution period. Optionally, in this case, the UE determines not to present media content if the UE does not receive, within a preset time range, indication information that is about presentation of media content and that is sent by the media delivery server. For example, a timer may be configured for the UE. The timer is started when the UE sends the call service man-machine interaction environment indication information to the media delivery server, after the UE sends the call service man-machine interaction environment indication information to the media delivery server, or after the UE calls another UE. The UE determines not to present media content when the timer times out and the UE has not received the indication information that is about presentation of media content and that is sent by the media delivery server.

Optionally, before S503b or after S503b, the media delivery server establishes a media channel based on the call service. For example, the media delivery server establishes an audio media channel if the call service is a voice call service, or the media delivery server establishes a video media channel if the call service is a video call service. For descriptions of the media channel, refer to the foregoing interpretations and descriptions of related technical terms in embodiments of this application. Details are not described herein again.

According to S501, S502, and S503b, the UE may send the call service man-machine interaction environment indication information to the media delivery server, so that the media delivery server can determine, based on the indication information, not to deliver media content to the UE during the call service execution period. The man-machine interaction environment indicated by the call service man-machine interaction environment indication information can reflect the current status of the user, for example, whether the user gazes at the screen of the UE or whether the user is suitable for watching or listening to media content. Therefore, when media content is unsuitable for being delivered to the UE, for example, when the user does not gaze at the screen or when the user is unsuitable for watching or listening to media content, media content may not be delivered to the UE. This can reduce or avoid consumption of data traffic of the UE and reduce occupied air interface resources while improving user experience.

Actions of the UE or the media delivery server in steps S501 to S505a, and S503b may be performed by the processor 401 in the device 40 shown in FIG. 4 by invoking the application program code stored in the memory 403. This is not limited in this embodiment of this application.

Optionally, as shown in FIG. 7, in a possible implementation of the method shown in FIG. 5, S501 includes at least one of S701 to S706.

S701: The UE detects whether the screen of the UE is lit.

Android is used as an example. The UE may detect, by using a capability of a power management module (PowerManager), whether the screen of the UE is lit. For example, the UE may detect, by using the following program code, whether the screen of the UE is lit:
import android.os.PowerManager;
PowerManager pm = (PowerManager)
getSystemService(Context.POWER_SERVICE);//if an application program is not in an Activity, the call service man-machine interaction environment indication information may be obtained, and whether the screen of the UE is lit may be learned based on the call service man-machine interaction environment indication information by using context.getSystemService;
boolean isScreenOn = pm.isScreenOn();
where the screen of the UE is lit when a result of isScreenOn is "true", or the screen of the UE is off when a result of isScreenOn is "false".

S702: The UE detects whether the interface of the call program of the UE is visible.

It can be understood that the call program has a plurality of life cycle statues, for example, an active (active) state, a paused (paused) state, and a stopped (stopped) state.

The active state of the call program may mean that when an Activity corresponding to the call program runs in the foreground of the screen (that is, at a top of a current task activity stack), the Activity gets a focus and can respond to a user operation. There is one Activity in the active state at one moment.

The paused state of the call program may mean that the Activity corresponding to the call program loses a focus but is still visible to the user. In other words, another transparent Activity, Toast, AlertDialog, or the like pops up on the Activity of the call program. Generally, a paused Activity is still in an alive state, retains all statuses and member information, and maintains a connection to a window manager. However, when a system memory is extremely low, the paused Activity can be killed by the system.

The stopped state of the call program may mean that the Activity corresponding to the call program is in the stopped state when the Activity is blocked by another Activity. The Activity corresponding to the call program still retains all the statuses and member information in the memory, but is invisible to the user. When the memory is needed elsewhere, the Activity corresponding to the call program is usually killed by the system.

In a possible implementation, the call program of the UE can perceive a life cycle status of the call program, and the UE determines, based on the life cycle status perceived by the call program, whether the interface of the call program of the UE is visible. For example, if the life cycle status of the call program is the active state, the UE determines that the interface of the call program is visible. If the life cycle status of the call program is the paused state or the stopped state, the UE determines that the interface of the call program is invisible.

S703: The UE detects whether the hands-free function of the UE is enabled.

Android is used as an example. The UE may detect, by using an audio management module (AudioManager), whether the hands-free function of the UE is enabled. For example, the UE may detect, by using the following program code, whether the hands-free function of the UE is enabled:
AudioManager audioManager = (AudioManager)context.getSystemService(Context.AUDIO_SERVICE); audioManager. isSpeakerphoneOn ();
where the hands-free function of the UE is enabled when a result of isSpeakerphoneOn is "true", or the hands-free function of the UE is disabled when a result of isSpeakerphoneOn is "false".

S704: The UE detects whether the wired headset of the UE is inserted.

Android is used as an example. The UE may detect, by using the audio management module, whether the wired headset of the UE is inserted. For example, the UE may detect, by using the following program code, whether the wired headset of the UE is inserted:
AudioManager audioManager = (AudioManager)context.getSystemService(Context.AUDIO_SERVICE); audioManager. isWiredHeadsetOn ();
where the wired headset of the UE is inserted when a result of isWiredHeadsetOn is "true", or the wired headset of the UE is not inserted when a result of isWiredHeadsetOn is "false".

S705: The UE detects whether the wireless headset of the UE is connected.

Android is used as an example. The UE may detect, by using the audio management module, whether the wireless headset of the UE is connected. For example, the UE may detect, by using the following program code, whether the wireless headset of the UE is connected:
AudioManager audioManager = (AudioManager)context.getSystemService(Context.AUDIO_SERVICE); audioManager. isBluetoothScoOn ();
where the wireless headset of the UE is connected when a result of isBluetoothScoOn is "true", or the wireless headset of the UE is not connected when a result of isBluetoothScoOn is "false".

S706: The UE detects whether the user is within the visible range of the UE.

In a possible implementation, the UE detects, by using a camera of the UE, whether the user is within the visible range of the UE. For example, the UE obtains image information by using a front-facing camera of the UE, and the UE identifies, based on the image information, whether eyes of the user may gaze at the screen. The image information may include at least one image, continuous image sequences (for example, a video), or the like.

Android is used as an example. The UE uses camera management (CAMERA) to execute the following code, start a camera, and obtain image information:

```
          public class Camera View extends SurfaceView implements SurfaceHolder.Callback,
 Camera.PictureCallback {
                private SurfaceHolder holder;
                private Camera camera;
                private boolean af;
                public CameraView(Context context) {//constructor
                        super(context);
                        holder = getHolder();//create Surface Holder
                        holder.addCallback(this);
 
                public void surfaceCreated(SurfaceHolder holder) {//handling of surface created
 events
          try {
                                camera = Camera.open();//initialization of the camera
                                camera.setPreviewDisplay(holder);
                        } catch (Exception e) {
                        }
          }
          }
```

In a possible implementation, the UE may use an API to start the front-facing camera and periodically take photos to obtain the image information. After obtaining the image information, the UE may recognize face information (for example, whether a complete face, partial face, or no face is included, and a size of a face that is recognized when the face exists) in the image information by using a face detection technology. If the UE finds no face or the detected face is excessively small, it indicates that the user may be far away from the screen of the UE and that there is a low probability that the user gazes at the screen. In this case, the UE determines that the user is out of the visible range of the UE. If the UE finds a face (or a partial face) and the detected face (or the partial face) is large enough, it indicates that the user may gaze at the screen of the UE. In this case, the UE determines that the user is within the visible range of the UE.

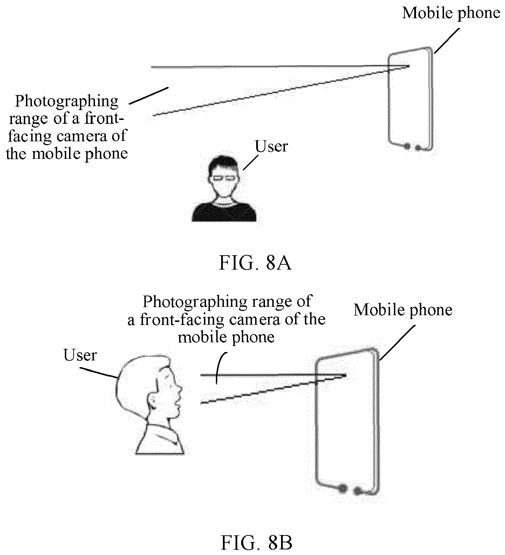

For example, as shown in FIG. 8A, a user is out of a photographing range of a front-facing camera of a mobile phone. Therefore, the UE finds no face, and the UE may determine that the user is not within a visible range of the UE. As shown in FIG. 8B, a user is within a photographing range of a front-facing camera of a mobile phone and the user is close to the mobile phone. Therefore, the UE can find a face and the face is large enough, and the UE may determine that the user is within a visible range of the UE.

According to the method shown in FIG. 7, the UE may detect at least one of the following: whether the screen of the UE is lit, whether the interface of the call program of the UE is visible, whether the hands-free function of the UE is enabled, whether the wired headset of the UE is inserted, whether the wireless headset of the UE is connected, or whether the user is within the visible range of the UE; and obtain the call service man-machine interaction environment indication information.

Actions of the UE in steps S701 to S706 may be performed by the processor 401 in the device 40 shown in FIG. 4 by invoking the application program code stored in the memory 403. This is not limited in this embodiment of this application.

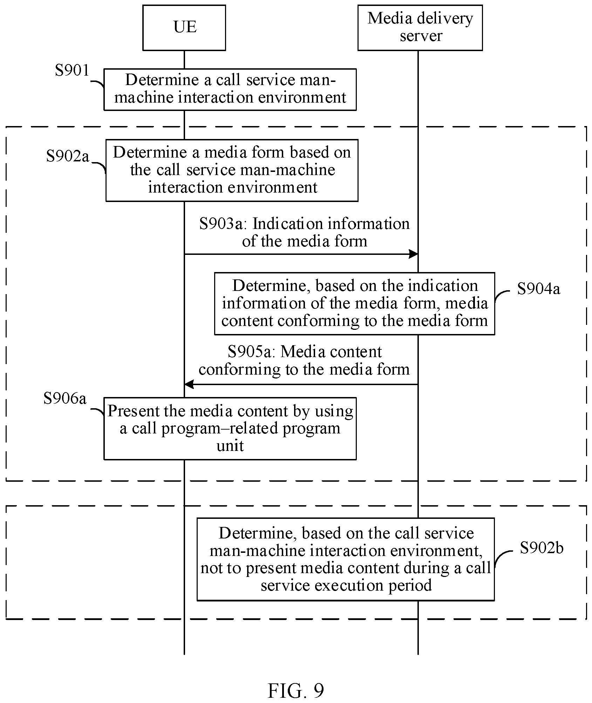

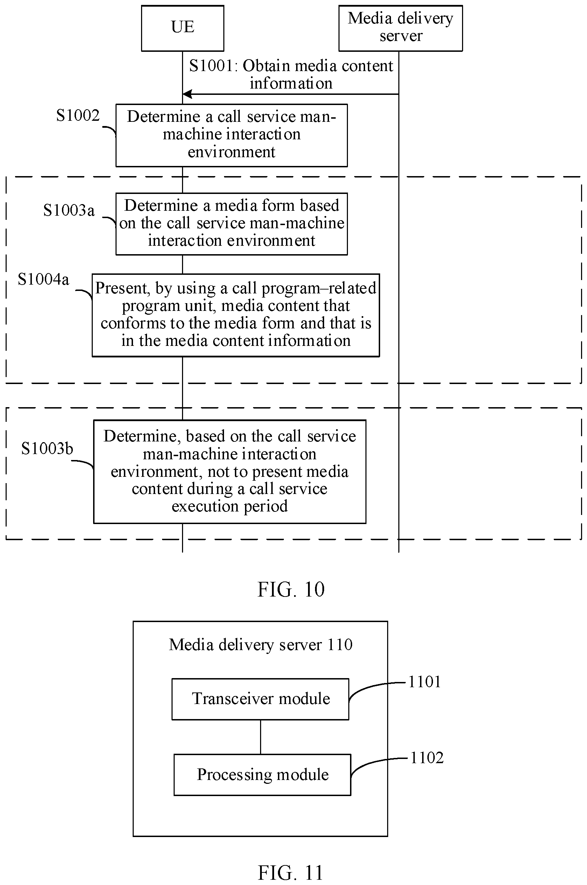

In the method shown in FIG. 5, the UE may send the call service man-machine interaction environment indication information to the media delivery server, so that the media delivery server can determine the to-be-delivered media content based on the indication information, or the media delivery server can determine, based on the indication information, not to deliver media content to the UE during the call service execution period. In specific application, alternatively, the UE may determine the media form, or determine not to present media content during the call service execution period. In this way, the UE may not send the call service man-machine interaction environment indication information to the media delivery server, to protect user privacy and improve information security. For details, refer to the following method shown in FIG. 9 or FIG. 10.

FIG. 9 shows another media content delivery method according to an embodiment of this application. The media content delivery method includes S901 to S906a, or the media content delivery method includes S901 and S902b.

S901: UE determines a call service man-machine interaction environment.

The UE may be any UE in FIG. 3A or FIG. 3B. For example, the UE may be the UE 301 or the UE 302 in FIG. 3A, or the UE may be the UE 304 or the UE 305 in FIG. 3B.

In this embodiment of this application, the call service man-machine interaction environment is a man-machine interaction environment of a user corresponding to the UE during a call service execution period. For details, refer to the corresponding descriptions in S501. Details are not described herein again.

In a possible implementation, when the call service is about to start or when the call service has started, the UE determines the call service man-machine interaction environment. The call process shown in FIG. 1A and FIG. 1B is used as an example, and S901 may be performed before S125. The call process shown in FIG. 2A and FIG. 2B is used as an example, and S901 may be performed before S222.

In a possible implementation, the determining, by UE, a call service man-machine interaction environment includes at least one of the following: detecting, by the UE, whether a screen of the UE is lit; detecting, by the UE, whether an interface of a call program of the UE is visible; detecting, by the UE, whether a hands-free function of the UE is enabled; detecting, by the UE, whether a wired headset of the UE is inserted; detecting, by the UE, whether a wireless headset of the UE is connected; or detecting, by the UE, whether the user is within a visible range of the UE. For details, refer to the descriptions in the method shown in FIG. 7. Details are not described herein again.

S902a: The UE determines a media form based on the call service man-machine interaction environment.

For descriptions of the media form in this embodiment of this application, refer to the foregoing interpretations and descriptions of related technical terms in embodiments of this application. Details are not described herein again.

It can be understood that the UE may determine, based on different call service man-machine interaction environments, media forms corresponding to the call service man-machine interaction environments. For example, if the call service man-machine interaction environment is suitable for the user to listen to sound played by the UE, the UE may determine that the media form is an audio form. If the call service man-machine interaction environment is suitable for the user to watch a video played by the UE, the UE may determine that the media form is an audible video form. If the call service man-machine interaction environment is suitable for the user to watch a video played by the UE, but the call service man-machine interaction environment is unsuitable for the UE to play external sound, the UE may determine that the media form is a silent video form. If the call service man-machine interaction environment is suitable for the user to watch a video played by the UE, but the call service man-machine interaction environment is unsuitable for the UE to play excessively high external sound, the UE may determine that the media form is a low-volume video form. Subsequently, the UE may request, from a media delivery server, media content conforming to the media form, and present the media content. In this way, the UE can present media content suitable for the user, so that user experience and delivery effect of the media content are improved. In addition, when the call service man-machine interaction environment is suitable for the user to listen to sound played by the UE, the UE does not request, from the media delivery server, media content in a video form. This can reduce or avoid consumption of data traffic of the UE and reduce occupied air interface resources while improving user experience.

In a possible implementation, the determining, by the UE, a media form based on the call service man-machine interaction environment includes: if any one of the following environments is detected, determining that the media form is the audio form: it is detected that the screen of the UE is off; or it is detected that the screen of the UE is lit and the interface of the call program of the UE is invisible; or it is detected that the screen of the UE is lit, the wired headset of the UE is inserted, and the user is out of the visible range of the UE; or it is detected that the screen of the UE is lit, the wireless headset of the UE is connected, and the user is out of the visible range of the UE. For details, refer to the descriptions in S503a. Details are not described herein again.

In a possible implementation, the determining, by the UE, a media form based on the call service man-machine interaction environment includes: if any one of the following environments is detected, determining that the media form is the audible video form: it is detected that the screen of the UE is lit, the interface of the call program of the UE is visible, and the wired headset of the UE is inserted; or it is detected that the screen of the UE is lit, the interface of the call program of the UE is visible, and the wireless headset of the UE is connected; or it is detected that the screen of the UE is lit, the interface of the call program of the UE is visible, the wireless headset of the UE is connected, and the user is within the visible range of the UE; or it is detected that the screen of the UE is lit, the interface of the call program of the UE is visible, the wired headset of the UE is inserted, and the user is within the visible range of the UE. For details, refer to the descriptions in S503a. Details are not described herein again.

In a possible implementation, the determining, by the UE, a media form based on the call service man-machine interaction environment includes: if it is detected that the screen of the UE is lit, the interface of the call program of the UE is visible, and the hands-free function of the UE is enabled, determining that the media form is the silent video form. For details, refer to the descriptions in S503a. Details are not described herein again.

In a possible implementation, the determining, by the UE, a media form based on the call service man-machine interaction environment includes: if any one of the following environments is detected, determining that the media form is the low-volume video form: it is detected that the wired headset of the UE is inserted; or it is detected that the wireless headset of the UE is connected; or it is detected that the screen of the UE is lit, the interface of the call program of the UE is visible, the hands-free function of the UE is disabled, the wired headset of the UE is not inserted, the wireless headset of the UE is not connected, and the user is within the visible range of the UE. For details, refer to the descriptions in S503a. Details are not described herein again.

S903a: The UE sends indication information of the media form to the media delivery server. Correspondingly, the media delivery server receives the indication information of the media form sent by the UE.

In this embodiment of this application, if the UE is the UE 301 or the UE 302 in FIG. 3A, the media delivery server may be the media delivery server 303 in FIG. 3A. If the UE is the UE 304 or the UE 305 in FIG. 3B, the media delivery server may be the media delivery server 306 in FIG. 3B.

In this embodiment of this application, the indication information of the media form may include at least one bit. The at least one bit may indicate the media form determined by the UE.

In an example, if the media form includes an audio form or a video form, the indication information of the media form includes one bit. If the media form determined by the UE is the audio form, a value of the one bit is "0"; or if the media form determined by the UE is the video form, a value of the one bit is "1", and vice versa.

In another example, if the media form includes an audio form, a silent video form, an audible video form, or a low-volume video form, the indication information of the media form includes two bits. If the media form determined by the UE is the audio form, a value of the two bits is "00". If the media form determined by the UE is the silent video form, a value of the two bits is "01". If the media form determined by the UE is the audible video form, a value of the two bits is "10". If the media form determined by the UE is the low-volume video form, a value of the two bits is "11".

It can be understood that, as described above, the functions of the media delivery server may be jointly deployed on one physical device, or may be deployed on a plurality of physical devices. The communication system shown in FIG. 3A is used as an example. If the functions of the media delivery server 303 are jointly deployed on one physical device, the UE sends the indication information of the media form to the media application module 3032. Correspondingly, the media application module 3032 receives the indication information of the media form sent by the UE. Subsequently, the media application module 3032 may send the indication information of the media form to the media decision module 3031. If the functions of the media delivery server 303 are deployed on a plurality of physical devices, the UE sends the indication information of the media form to the Media AS. Correspondingly, the Media AS receives the indication information of the media form sent by the UE. Subsequently, the Media AS may send the indication information of the media form to the media decision server. The procedure shown in FIG. 1A and FIG. 1B is used as an example. The Media AS may send the indication information of the media form to the media decision server by using the request message in S125, that is, the indication information of the media form may be included in the request message in S125.

The communication system shown in FIG. 3B is used as an example. If the functions of the media delivery server 306 are jointly deployed on one physical device, the UE sends the indication information of the media form to the media decision module 3061. Correspondingly, the media decision module 3061 receives the indication information of the media form sent by the UE. If the functions of the media delivery server 306 are deployed on a plurality of physical devices, the UE sends the indication information of the media form to the media decision server. Correspondingly, the media decision server receives the indication information of the media form sent by the UE. The procedure shown in FIG. 2A and FIG. 2B is used as an example. The UE may send the indication information of the media form to the media decision server by using the request message in S222, that is, the indication information of the media form may be included in the request message in S222.

S904a: The media delivery server determines, based on the indication information of the media form, the media content conforming to the media form.

For example, if the indication information of the media form indicates that the media form determined by the UE is the audio form, the media delivery server determines media content in the audio form as the media content conforming to the media form. If the indication information of the media form indicates that the media form determined by the UE is the silent video form, the media delivery server determines media content in the silent video form as the media content conforming to the media form. If the indication information of the media form indicates that the media form determined by the UE is the audible video form, the media delivery server determines media content in the audible video form as the media content conforming to the media form. If the indication information of the media form indicates that the media form determined by the UE is the low-volume video form, the media delivery server determines media content in the low-volume video form as the media content conforming to the media form.

S905a: The media delivery server sends the media content conforming to the media form to the UE. Correspondingly, the UE receives the media content that conforms to the media form and that is sent by the media delivery server.

In a possible implementation, the media delivery server sends the media content conforming to the media form to the UE through a media channel. For descriptions of the media channel, refer to the foregoing interpretations and descriptions of related technical terms in embodiments of this application. Details are not described herein again.

It can be understood that the media channel may be established before S904a or after S904a. If the media channel is established before S904a, the media delivery server may establish the media channel based on the call service before S904a. For example, the media delivery server establishes an audio media channel if the call service is a voice call service, or the media delivery server establishes a video media channel if the call service is a video call service. Subsequently, after the media delivery server determines the media content conforming to the media form (that is, after S904a is performed), if the media channel determined by the media delivery server is capable of being used to transmit the media content conforming to the media form, the media delivery server sends the media content conforming to the media form to the UE through the media channel. If the media channel determined by the media delivery server is incapable of being used to transmit the media content conforming to the media form, the media delivery server performs switching on the media channel, and sends the media content conforming to the media form to the UE through a switched media channel.

It can be understood that if the media channel is established after S904a, the media delivery server may establish the media channel based on the media form determined by the UE. For example, the media delivery server establishes an audio media channel if the media form determined by the UE is the audio form, or the media delivery server establishes a video media channel if the media form determined by the UE is the video form.

It can be understood that after delivery of the media content conforming to the media form ends, if the media channel used to transmit the media content conforming to the media form can be used for the call service, the UE performs the call service with another UE through the media channel used to transmit the media content conforming to the media form. If the media channel used to transmit the media content conforming to the media form cannot be used for the call service, the UE performs switching on the media channel, and performs the call service with another UE through the switched media channel.

In a possible implementation, in S905a, if the media delivery server is the media delivery server 303 in FIG. 3A, and the functions of the media delivery server are jointly deployed on one physical device, the media decision module 3031 sends information about the media content conforming to the media form to the media application module 3032 after determining the media content conforming to the media form. After receiving the information about the media content conforming to the media form, the media application module 3032 sends an info message to the media resource management module 3033, to control the media resource management module 3033 to deliver the media content conforming to the media form to the UE.

In a possible implementation, if the media delivery server is the media delivery server 303 in FIG. 3A, and the functions of the media delivery server are deployed on a plurality of physical devices, the media decision server sends information about the media content conforming to the media form to the Media AS after determining the media content conforming to the media form. After receiving the information about the media content conforming to the media form, the Media AS sends an info message to the MRS, to control the MRS to deliver the media content conforming to the media form to the UE. If the procedure shown in FIG. 1A and FIG. 1B is used as an example, S905a may be corresponding to S126 and S127.

It can be understood that in the foregoing two possible implementations, the information about the media content conforming to the media form may indicate the to-be-delivered media content.

In a possible implementation, in S905a, if the media delivery server is the media delivery server 306 in FIG. 3B, and the functions of the media delivery server are jointly deployed on one physical device, the media decision module 3061 sends an address of the media content conforming to the media form to the UE after determining the media content conforming to the media form. After receiving the address of the media content conforming to the media form, the UE requests, from the media resource management module 3062, the media content conforming to the media form, so that the media resource management module 3062 delivers the media content conforming to the media form to the UE. Alternatively, after determining the media content conforming to the media form, the media decision module 3061 controls the media resource management module 3062 to deliver the media content conforming to the media form to the UE. For example, the media decision module 3061 controls the media resource management module 3062 to send a response message of the request message for requesting media content to the UE. The response message includes the media content conforming to the media form.

In a possible implementation, in S905a, if the media delivery server is the media delivery server 306 in FIG. 3B, and the functions of the media delivery server are deployed on a plurality of physical devices, the media decision server sends an address of the media content conforming to the media form to the UE after determining the media content conforming to the media form. After receiving the address of the media content conforming to the media form, the UE requests, from the MRS, the media content conforming to the media form, so that the MRS delivers the media content conforming to the media form to the UE. If the procedure shown in FIG. 2A and FIG. 2B is used as an example, S905a may be corresponding to S224 to S226.

S906a: The UE presents the media content by using a call program-related program unit.

For descriptions of S906a, refer to the corresponding descriptions in S505a. Details are not described herein again.

According to S901 to S906a, the UE may determine the call service man-machine interaction environment, determine the media form based on the call service man-machine interaction environment, and indicate the media form to the media delivery server, so that the media delivery server can determine, based on the media form, the media content conforming to the media form, and send the media content to the UE. The call service man-machine interaction environment can reflect a current status of the user, for example, whether the user gazes at the screen of the UE or whether the user is suitable for watching or listening to media content. Therefore, the media form determined based on the call service man-machine interaction environment better meets a requirement of the user, so that user experience and the delivery effect of the media content can be improved.

In this embodiment of this application, S902a to S906a may be replaced with S902b.

S902b: The UE determines, based on the call service man-machine interaction environment, not to present media content during the call service execution period.

It can be understood that the UE may determine, based on different call service man-machine interaction environments, whether to present media content during the call service execution period. For example, if the call service man-machine interaction environment is suitable for delivering media content, the UE may determine to present media content during the call service execution period. If the call service man-machine interaction environment is unsuitable for delivering media content, the UE may determine not to present media content during the call service execution period. In this way, when the call service man-machine interaction environment is unsuitable for delivering media content, the UE may not present media content. This can reduce or avoid consumption of data traffic of the UE while improving user experience.

In a possible implementation, the determining, by the UE based on the call service man-machine interaction environment, not to present media content during the call service execution period includes: if any one of the following environments is detected, determining not to present media content during the call service execution period: it is detected that the screen of the UE is off; or it is detected that the screen of the UE is lit and the interface of the call program of the UE is invisible; or it is detected that the screen of the UE is lit, the wired headset of the UE is inserted, and the user is out of the visible range of the UE; or it is detected that the screen of the UE is lit, the wireless headset of the UE is connected, and the user is out of the visible range of the UE. For details, refer to the descriptions in S503b. Details are not described herein again.

Optionally, before S902b or after S902b, the UE establishes a media channel based on the call service. For example, the UE establishes an audio media channel if the call service is a voice call service, or the UE establishes a video media channel if the call service is a video call service. For descriptions of the media channel, refer to the foregoing interpretations and descriptions of related technical terms in embodiments of this application. Details are not described herein again.

According to S901 and S902b, the UE may determine the call service man-machine interaction environment, and determine, based on the call service man-machine interaction environment, not to present media content during the call service execution period. The call service man-machine interaction environment can reflect a current status of the user, for example, whether the user gazes at the screen of the UE or whether the user is suitable for watching or listening to media content. Therefore, when media content is unsuitable for being presented, for example, when the user does not gaze at the screen or when the user is unsuitable for watching or listening to media content, the UE may not present media content. This improves user experience. In addition, the UE may not send call service man-machine interaction environment indication information to the media delivery server, to protect user privacy and improve information security.

Actions of the UE or the media delivery server in steps S901 to S906a, and S902b may be performed by the processor 401 in the device 40 shown in FIG. 4 by invoking the application program code stored in the memory 403. This is not limited in this embodiment of this application.

FIG. 10 shows another media content delivery method according to an embodiment of this application. The media content delivery method includes S1001 to S1004a, or the media content delivery method includes S1001, S1002, and S1003b.

S1001: UE obtains media content information.

In S1001, the media content information may include a plurality of pieces of media content. There are a plurality of media forms corresponding to the plurality of pieces of media content. For example, the media content information includes six pieces of media content. Two pieces of media content are in an audio form, two pieces of media content are in an audible video form, and two pieces of media content are in a silent video form.

In a possible implementation, the UE receives the media content information sent by a media delivery server. In other words, the media delivery server may send the media content information to the UE in advance. In this way, after determining a media form, the UE can present media content that conforms to the media form and that is in the media content information.

S1002: The UE determines a call service man-machine interaction environment.

S1003a: The UE determines the media form based on the call service man-machine interaction environment.

For descriptions of S1002 and S1003a, refer to the corresponding descriptions in S901 and S902a. Details are not described herein again.

S1004a: The UE presents, by using a call program-related program unit, the media content that conforms to the media form and that is in the media content information.

In a possible implementation, the UE may determine, from the media content information, the media content conforming to the media form. For example, if the media form determined by the UE is an audio form, the UE determines that media content in the audio form in the media content information is the media content conforming to the media form. If the media form determined by the UE is a silent video form, the UE determines that media content in the silent video form in the media content information is the media content conforming to the media form. If the media form determined by the UE is an audible video form, the UE determines that media content in the audible video form in the media content information is the media content conforming to the media form. If the media form determined by the UE is a low-volume video form, the UE determines that media content in the low-volume video form in the media content information is the media content conforming to the media form. Subsequently, the UE presents, by using the call program-related program unit, the media content conforming to the media form. For details, refer to the corresponding descriptions in S505a. Details are not described herein again.

According to S 1001 to S1004a, the UE may first obtain the media content information, determine the call service man-machine interaction environment, and determine the media form based on the call service man-machine interaction environment. In this way, after determining the media form, the UE can present the media content that conforms to the media form and that is in the media content information. The call service man-machine interaction environment can reflect a current status of the user, for example, whether the user gazes at a screen of the UE or whether the user is suitable for watching or listening to media content. Therefore, the media form determined based on the call service man-machine interaction environment better meets a requirement of the user, so that user experience and delivery effect of the media content can be improved. In addition, after determining the media form, the UE does not need to request the media content from the media delivery server, and directly locally determines the media content conforming to the media form and presents the media content, so that the media content can be presented in time. This shortens a time in which the UE determines the media form and the UE presents the media content. Moreover, the UE may not send call service man-machine interaction environment indication information to the media delivery server, to protect user privacy and improve information security.

In this embodiment of this application, S1003a and S1004a may be replaced with S1003b.

S1003b: The UE determines, based on the call service man-machine interaction environment, not to present media content during the call service execution period.

For descriptions of S1003b, refer to the corresponding descriptions in S902b. Details are not described herein again.

According to S1001, S1002, and S1003b, the UE may first obtain the media content information, determine the call service man-machine interaction environment, and determine, based on the call service man-machine interaction environment, not to present media content during the call service execution period. The call service man-machine interaction environment can reflect a current status of the user, for example, whether the user gazes at a screen of the UE or whether the user is suitable for watching or listening to media content. Therefore, when media content is unsuitable for being presented, for example, when the user does not gaze at the screen or when the user is unsuitable for watching or listening to media content, the UE may not present media content. This can reduce or avoid consumption of data traffic of the UE and reduce occupied air interface resources while improving user experience. Moreover, the UE may not send call service man-machine interaction environment indication information to the media delivery server, to protect user privacy and improve information security.

Actions of the UE or the media delivery server in steps S1001 to S1004a, and S1003b may be performed by the processor 401 in the device 40 shown in FIG. 4 by invoking the application program code stored in the memory 403. This is not limited in this embodiment of this application.

The foregoing mainly describes the solutions provided in embodiments of this application from a perspective of interaction between devices. It can be understood that, to implement the foregoing functions, the media delivery server or the UE includes a corresponding hardware structure and/or software module for performing the functions. A person skill in the art can be easily aware that, in combination with units and algorithm operations of the examples described in embodiments disclosed in this specification, this application can be implemented by hardware or a combination of hardware and computer software. Whether a function is performed by hardware or by computer software driving hardware depends on particular applications and design constraints of the technical solutions. A person skilled in the art may use a different method to implement the described functions for each particular application, but it cannot be considered that the implementation goes beyond the scope of this application.

In this embodiment of this application, functional modules of the media delivery server or the UE may be obtained through division based on the foregoing method examples. For example, each functional module may be obtained through division in correspondence to each function, or at least two functions may be integrated into one processing module. The integrated module may be implemented in a form of hardware, or may be implemented in a form of a software functional module. It can be noted that the module division in embodiments of this application is an example, is merely logical function division, and may be other division during actual implementation.

For example, when each functional module is obtained through division in an integrated manner. FIG. 11 is a schematic diagram of a structure of a media delivery server 110. The media delivery server 110 includes a transceiver module 1101 and a processing module 1102. The transceiver module 1101 may also be referred to as a transceiver unit, configured to implement a sending/receiving function. For example, the transceiver module 1101 may be a transceiver circuit, a transceiver, or a communication interface.

For example, the media delivery server 110 is configured to implement functions of the media delivery server in the foregoing method embodiments. The media delivery server 110 is, for example, the media delivery server described in the embodiment shown in FIG. 5 or the embodiment shown in FIG. 7.

The transceiver module 1101 is configured to receive call service man-machine interaction environment indication information sent by UE, where the call service man-machine interaction environment indication information indicates a man-machine interaction environment of a user corresponding to the UE during a call service execution period. The processing module 1102 is configured to determine to-be-delivered media content based on the call service man-machine interaction environment indication information. The transceiver module 1101 is further configured to deliver the to-be-delivered media content to the UE during the call service execution period.

Alternatively, the transceiver module 1101 is configured to receive call service man-machine interaction environment indication information sent by UE, where the call service man-machine interaction environment indication information indicates a man-machine interaction environment of a user corresponding to the UE during a call service execution period. The processing module 1102 is configured to determine, based on the call service man-machine interaction environment indication information, not to deliver media content to the UE during the call service execution period.

When functions of the media delivery server are implemented, for other functions that can be implemented by the media delivery server 110, reference may be made to related descriptions of the embodiment shown in FIG. 5 or the embodiment shown in FIG. 7. Details are not described again.

In a simple embodiment, a person skilled in the art can figure out that the form shown in FIG. 4 may be used for the media delivery server 110. For example, the processor 401 in FIG. 4 may invoke computer executable instructions stored in the memory 403, so that the media delivery server 110 performs the methods in the foregoing method embodiments.

For example, functions/implementation processes of the transceiver module 1101 and the processing module 1102 in FIG. 11 may be implemented by the processor 401 in FIG. 4 by invoking the computer executable instructions stored in the memory 403. Alternatively, a function/implementation process of the processing module 1102 in FIG. 11 may be implemented by the processor 401 in FIG. 4 by invoking the computer executable instructions stored in the memory 403, and a function/implementation process of the transceiver module 1101 in FIG. 11 may be implemented by the communication interface 404 in FIG. 4.

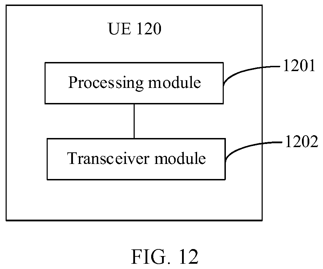

For example, when each functional module is obtained through division in an integrated manner. FIG. 12 is a schematic diagram of a structure of UE 120. The UE 120 includes a processing module 1201 and a transceiver module 1202. The transceiver module 1202 may also be referred to as a transceiver unit, configured to implement a sending/receiving function. For example, the transceiver module 1202 may be a transceiver circuit, a transceiver, or a communication interface.

For example, the UE 120 is configured to implement functions of the UE in the foregoing method embodiments. The UE 120 is, for example, the UE described in the embodiment shown in FIG. 5 or the embodiment shown in FIG. 7.

The processing module 1201 is configured to obtain call service man-machine interaction environment indication information, where the call service man-machine interaction environment indication information indicates a man-machine interaction environment of a user corresponding to the UE during a call service execution period. The transceiver module 1202 is configured to send the call service man-machine interaction environment indication information to a media delivery server. The transceiver module 1202 is further configured to receive to-be-delivered media content sent by the media delivery server. The processing module 1201 is further configured to present the to-be-delivered media content by using a call program-related program unit.

Alternatively, the processing module 1201 is configured to obtain call service man-machine interaction environment indication information, where the call service man-machine interaction environment indication information indicates a man-machine interaction environment of a user corresponding to the UE during a call service execution period. The transceiver module 1202 is configured to send the call service man-machine interaction environment indication information to a media delivery server. The processing module 1201 is further configured to determine not to present media content.

When functions of the UE are implemented, for other functions that can be implemented by the UE 120, reference may be made to related descriptions of the embodiment shown in FIG. 5 or the embodiment shown in FIG. 7. Details are not described again.

Alternatively, for example, the UE 120 is the UE described in the embodiment shown in FIG. 9.

The processing module 1201 is configured to determine a call service man-machine interaction environment, where the call service man-machine interaction environment is a man-machine interaction environment of a user corresponding to the UE during a call service execution period. The processing module 1201 is further configured to determine a media form based on the call service man-machine interaction environment. The transceiver module 1202 is configured to send indication information of the media form to a media delivery server. The transceiver module 1202 is further configured to receive media content that conforms to the media form and that is sent by the media delivery server. The processing module 1201 is further configured to present the media content by using a call program-related program unit.

Alternatively, the processing module 1201 is configured to determine a call service man-machine interaction environment, where the call service man-machine interaction environment is a man-machine interaction environment of a user corresponding to the UE during a call service execution period. The processing module 1201 is further configured to determine, based on the call service man-machine interaction environment, not to present media content during the call service execution period.

When functions of the UE are implemented, for other functions that can be implemented by the UE 120, reference may be made to related descriptions of the embodiment shown in FIG. 9. Details are not described again.

Alternatively, for example, the UE 120 is the UE described in the embodiment shown in FIG. 10.

The transceiver module 1202 is configured to obtain media content information. The processing module 1201 is configured to determine a call service man-machine interaction environment, where the call service man-machine interaction environment is a man-machine interaction environment of a user corresponding to the UE during a call service execution period. The processing module 1201 is further configured to: determine a media form based on the call service man-machine interaction environment, and present, by using a call program-related program unit, media content that conforms to the media form and that is in the media content information.

Alternatively, the transceiver module 1202 is configured to obtain media content information. The processing module 1201 is configured to determine a call service man-machine interaction environment, where the call service man-machine interaction environment is a man-machine interaction environment of a user corresponding to the UE during a call service execution period. The processing module 1201 is further configured to determine, based on the call service man-machine interaction environment, not to present media content during the call service execution period.

When functions of the UE are implemented, for other functions that can be implemented by the UE 120, reference may be made to related descriptions of the embodiment shown in FIG. 10. Details are not described again.

In a simple embodiment, a person skilled in the art can figure out that the form shown in FIG. 4 may be used for the UE 120. For example, the processor 401 in FIG. 4 may invoke computer executable instructions stored in the memory 403, so that the UE 120 performs the methods in the foregoing method embodiments.

For example, functions/implementation processes of the processing module 1201 and the transceiver module 1202 in FIG. 12 may be implemented by the processor 401 in FIG. 4 by invoking the computer executable instructions stored in the memory 403. Alternatively, a function/implementation process of the processing module 1201 in FIG. 12 may be implemented by the processor 401 in FIG. 4 by invoking the computer executable instructions stored in the memory 403, and a function/implementation process of the transceiver module 1202 in FIG. 12 may be implemented by the communication interface 404 in FIG. 4.

It can be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions to implement the foregoing method procedures. The processor may be built into an SoC (system on a chip) or an ASIC, or may be an independent semiconductor chip. In addition to cores used to execute software instructions to perform operations or processing, the processor may further include a necessary hardware accelerator, for example, a field programmable gate array (field programmable gate array, FPGA), a PLD (programmable logic device), or a logic circuit implementing a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this embodiment of this application.

Optionally, an embodiment of this application further provides a computer-readable storage medium. All or some of the procedures in the foregoing method embodiments may be completed by a computer program instructing related hardware. The program may be stored in the computer-readable storage medium. When the program is executed, the procedures in the foregoing method embodiments may be included. The computer-readable storage medium may be an internal storage unit of the media delivery server or the UE in any one of the foregoing embodiments, for example, a hard disk or memory of the media delivery server or the UE. Alternatively, the computer-readable storage medium may be an external storage device of the media delivery server or the UE, for example, a plug-in hard disk, a smart media card (smart media card, SMC), a secure digital (secure digital, SD) card, or a flash card (flash card) that is disposed on the media delivery server or the UE. Alternatively, the computer-readable storage medium may include both an internal storage unit and an external storage device of the media delivery server or the UE. The computer-readable storage medium is configured to store the computer program and other programs and data that are needed by the media delivery server or the UE. The computer-readable storage medium may be further configured to temporarily store data that has been output or is to be output.

Optionally, an embodiment of this application further provides a computer program product. All or some of the procedures in the foregoing method embodiments may be completed by a computer program instructing related hardware. The program may be stored in the computer program product. When the program is executed, the procedures in the foregoing method embodiments may be included.

Optionally, an embodiment of this application further provides computer instructions. All or some of the procedures in the foregoing method embodiments may be completed by the computer instructions instructing related hardware (for example, a computer, a processor, an access network device, a mobility management network element, or a session management network element). The program may be stored in the foregoing computer-readable storage medium or the foregoing computer program product.

The foregoing descriptions about implementations allow a person skilled in the art to understand that, for the purpose of convenient and brief description, division into the foregoing functional modules is used as an example for illustration. In actual application, the foregoing functions can be allocated to different functional modules for implementation depending on a requirement, that is, an inner structure of an apparatus is divided into different functional modules to implement all or some of the functions described above.

In the several embodiments provided in this application, it can be understood that the disclosed apparatuses and methods may be implemented in other manners. For example, the described apparatus embodiments are merely examples. For example, the module or unit division is merely logical function division and may be other division during actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may be one or more physical units, may be located in one place, or may be distributed in different places. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A media content delivery method, applied to a media delivery server, wherein the method comprises:
receiving call service man-machine interaction environment indication information sent by user equipment, wherein the call service man-machine interaction environment indication information indicates a man-machine interaction environment of a user corresponding to the user equipment during a call service execution period; and
determining to-be-delivered media content based on the call service man-machine interaction environment indication information, and delivering the to-be-delivered media content to the user equipment during the call service execution period; or determining, based on the call service man-machine interaction environment indication information, not to deliver media content to the user equipment during the call service execution period.

2. The method according to claim 1, wherein the man-machine interaction environment comprises any one or any combination of the following:
whether a screen of the user equipment is lit;
whether an interface of a call program of the user equipment is visible;
whether a hands-free function of the user equipment is enabled;
whether a wired headset of the user equipment is inserted;
whether a wireless headset of the user equipment is connected; or
whether the user is within a visible range of the user equipment.

3. The method according to claim 1, wherein the determining to-be-delivered media content based on the call service man-machine interaction environment indication information comprises:
determining a media form based on the call service man-machine interaction environment indication information, wherein the media form comprises an audio form, a silent video form, an audible video form, or a low-volume video form, and a default volume of media content in the low-volume video form is greater than 0 and less than a preset threshold; and
determining media content conforming to the media form as the to-be-delivered media content.

4. The method according to claim 3, wherein the determining a media form based on the call service man-machine interaction environment indication information comprises: if any one of the following holds true, determining that the media form is the audio form:
the call service man-machine interaction environment indication information indicates that a screen of the user equipment is off; or
the call service man-machine interaction environment indication information indicates that a screen of the user equipment is lit and an interface of a call program of the user equipment is invisible; or
the call service man-machine interaction environment indication information indicates that a screen of the user equipment is lit, a wired headset of the user equipment is inserted, and the user is out of a visible range of the user equipment; or
the call service man-machine interaction environment indication information indicates that a screen of the user equipment is lit, a wireless headset of the user equipment is connected, and the user is out of a visible range of the user equipment.

5. The method according to claim 3, wherein the determining a media form based on the call service man-machine interaction environment indication information comprises: if any one of the following holds true, determining that the media form is the audible video form:
the call service man-machine interaction environment indication information indicates that a screen of the user equipment is lit, an interface of a call program of the user equipment is visible, and a wired headset of the user equipment is inserted; or
the call service man-machine interaction environment indication information indicates that a screen of the user equipment is lit, an interface of a call program of the user equipment is visible, and a wireless headset of the user equipment is connected; or
the call service man-machine interaction environment indication information indicates that a screen of the user equipment is lit, an interface of a call program of the user equipment is visible, a wireless headset of the user equipment is connected, and the user is within a visible range of the user equipment; or
the call service man-machine interaction environment indication information indicates that a screen of the user equipment is lit, an interface of a call program of the user equipment is visible, a wired headset of the user equipment is inserted, and the user is within a visible range of the user equipment.

6. The method according to claim 3, wherein the determining a media form based on the call service man-machine interaction environment indication information comprises:
if the call service man-machine interaction environment indication information indicates that a screen of the user equipment is lit, an interface of a call program of the user equipment is visible, and a hands-free function of the user equipment is enabled, determining that the media form is the silent video form.

7. The method according to claim 3, wherein the determining a media form based on the call service man-machine interaction environment indication information comprises:
if any one of the following holds true, determining that the media form is the low-volume video form:
the call service man-machine interaction environment indication information indicates that a wired headset of the user equipment is inserted; or
the call service man-machine interaction environment indication information indicates that a wireless headset of the user equipment is connected; or
the call service man-machine interaction environment indication information indicates that a screen of the user equipment is lit, an interface of a call program of the user equipment is visible, a hands-free function of the user equipment is disabled, a wired headset of the user equipment is not inserted, a wireless headset of the user equipment is not connected, and the user is within a visible range of the user equipment.

8. The method according to claim 2, wherein the determining to-be-delivered media content based on the call service man-machine interaction environment indication information comprises:
if any one of the following holds true, determining that the to-be-delivered media content is media content transmitted by using a voice:
the call service man-machine interaction environment indication information indicates that the screen of the user equipment is off; or
the call service man-machine interaction environment indication information indicates that the screen of the user equipment is lit and the interface of the call program of the user equipment is invisible; or
the call service man-machine interaction environment indication information indicates that the screen of the user equipment is lit, the wired headset of the user equipment is inserted, and the user is out of the visible range of the user equipment; or
the call service man-machine interaction environment indication information indicates that the screen of the user equipment is lit, the wireless headset of the user equipment is connected, and the user is out of the visible range of the user equipment.

9. The method according to claim 2, wherein the determining to-be-delivered media content based on the call service man-machine interaction environment indication information comprises:
if any one of the following holds true, determining that the to-be-delivered media content is media content transmitted by using an image:
the call service man-machine interaction environment indication information indicates that the screen of the user equipment is lit, the interface of the call program of the user equipment is visible, and the hands-free function of the user equipment is disabled; or
the call service man-machine interaction environment indication information indicates that the screen of the user equipment is lit, the interface of the call program of the user equipment is visible, and the hands-free function of the user equipment is enabled.

10. The method according to claim 1 or 2, wherein the determining to-be-delivered media content based on the call service man-machine interaction environment indication information comprises:
determining a group type of the user based on the call service man-machine interaction environment indication information; and
determining the to-be-delivered media content based on the group type.

11. The method according to claim 2, wherein the determining, based on the call service man-machine interaction environment indication information, not to deliver media content to the user equipment during the call service execution period comprises:
if any one of the following holds true, determining not to deliver media content to the user equipment during the call service execution period:
the call service man-machine interaction environment indication information indicates that the screen of the user equipment is off; or
the call service man-machine interaction environment indication information indicates that the screen of the user equipment is lit and the interface of the call program of the user equipment is invisible; or
the call service man-machine interaction environment indication information indicates that the screen of the user equipment is lit, the wired headset of the user equipment is inserted, and the user is out of the visible range of the user equipment; or
the call service man-machine interaction environment indication information indicates that the screen of the user equipment is lit, the wireless headset of the user equipment is connected, and the user is out of the visible range of the user equipment.

12. The method according to any one of claims 1 to 11, wherein the receiving call service man-machine interaction environment indication information sent by user equipment comprises:
receiving a session initiation protocol information reporting SIP-info message sent by the user equipment, wherein the SIP-info message comprises the call service man-machine interaction environment indication information.

13. The method according to any one of claims 1 to 11, wherein the receiving call service man-machine interaction environment indication information sent by user equipment comprises:
receiving a session initiation protocol notification SIP-Notification message sent by the user equipment, wherein the SIP-Notification message comprises the call service man-machine interaction environment indication information; and
before the receiving call service man-machine interaction environment indication information sent by user equipment, the method further comprises:
sending a subscription message to the user equipment, wherein the subscription message is used to subscribe to the call service man-machine interaction environment indication information.

14. The method according to any one of claims 1 to 11, wherein the receiving call service man-machine interaction environment indication information sent by user equipment comprises:
receiving a request message for requesting media content sent by the user equipment, wherein the request message for requesting media content comprises the call service man-machine interaction environment indication information.

15. The method according to claim 14, wherein the delivering the to-be-delivered media content to the user equipment during the call service execution period comprises:
sending a response message of the request message to the user equipment during the call service execution period, wherein the response message comprises the to-be-delivered media content.

16. The method according to claim 14, wherein if it is determined, based on the call service man-machine interaction environment indication information, not to deliver media content to the user equipment during the call service execution period, the method further comprises:
sending a response message of the request message to the user equipment, wherein the response message comprises first indication information, and the first indication information indicates not to deliver media content to the user equipment during the call service execution period.

17. The method according to any one of claims 1 to 13, wherein after the determining to-be-delivered media content based on the call service man-machine interaction environment indication information, the method further comprises:
establishing a media channel based on the to-be-delivered media content, wherein a type of the media channel comprises an audio media channel or a video media channel, the audio media channel is used to transmit media content in an audio form, and/or the audio media channel is used to transmit voice information that is between user equipments corresponding to a call service and that is present during the call service execution period, and the video media channel is used to transmit media content in a video form; and
the delivering the to-be-delivered media content to the user equipment during the call service execution period comprises:
delivering the to-be-delivered media content to the user equipment through the media channel during the call service execution period.

18. The method according to any one of claims 1 to 13, wherein before the determining to-be-delivered media content based on the call service man-machine interaction environment indication information, the method further comprises:
establishing a media channel based on a call service, wherein a type of the media channel comprises an audio media channel or a video media channel, the audio media channel is used to transmit media content in an audio form, and/or the audio media channel is used to transmit voice information that is between user equipments corresponding to the call service and that is present during the call service execution period, and the video media channel is used to transmit media content in a video form.

19. The method according to claim 18, wherein after the determining to-be-delivered media content based on the call service man-machine interaction environment indication information, the method further comprises:
if the media channel is incapable of being used to transmit the to-be-delivered media content, performing switching on the media channel; and
the delivering the to-be-delivered media content to the user equipment during the call service execution period comprises:
delivering the to-be-delivered media content to the user equipment through a switched media channel during the call service execution period.

20. The method according to claim 18, wherein if the media channel is capable of being used to transmit the to-be-delivered media content, the delivering the to-be-delivered media content to the user equipment during the call service execution period comprises:
delivering the to-be-delivered media content to the user equipment through the media channel during the call service execution period.

21. The method according to any one of claims 1 to 13, wherein if it is determined, based on the call service man-machine interaction environment indication information, not to deliver media content to the user equipment during the call service execution period, the method further comprises:
establishing a media channel based on a call service, wherein a type of the media channel comprises an audio media channel or a video media channel, the audio media channel is used to transmit media content in an audio form, and/or the audio media channel is used to transmit voice information that is between user equipments corresponding to the call service and that is present during the call service execution period, and the video media channel is used to transmit media content in a video form.

22. A media content delivery method, applied to user equipment, wherein the method comprises:
obtaining call service man-machine interaction environment indication information, wherein the call service man-machine interaction environment indication information indicates a man-machine interaction environment of a user corresponding to the user equipment during a call service execution period;
sending the call service man-machine interaction environment indication information to a media delivery server; and
receiving to-be-delivered media content sent by the media delivery server, and presenting the to-be-delivered media content by using a call program-related program unit; or determining not to present media content.

23. The method according to claim 22, wherein the obtaining call service man-machine interaction environment indication information comprises at least one of the following:
detecting whether a screen of the user equipment is lit;
detecting whether an interface of a call program of the user equipment is visible;
detecting whether a hands-free function of the user equipment is enabled;
detecting whether a wired headset of the user equipment is inserted;
detecting whether a wireless headset of the user equipment is connected; or
detecting whether the user is within a visible range of the user equipment.

24. The method according to claim 22 or 23, wherein the sending the call service man-machine interaction environment indication information to a media delivery server comprises:
sending a session initiation protocol information reporting SIP-info message to the media delivery server, wherein the SIP-info message comprises the call service man-machine interaction environment indication information.

25. The method according to claim 22 or 23, wherein the sending the call service man-machine interaction environment indication information to a media delivery server comprises:
sending a session initiation protocol notification SIP-Notification message to the media delivery server, wherein the SIP-Notification message comprises the call service man-machine interaction environment indication information; and
before the sending the call service man-machine interaction environment indication information to a media delivery server, the method further comprises:
receiving a subscription message from the media delivery server, wherein the subscription message is used to subscribe to the call service man-machine interaction environment indication information.

26. The method according to claim 22 or 23, wherein the sending the call service man-machine interaction environment indication information to a media delivery server comprises:
sending a request message for requesting media content to the media delivery server, wherein the request message for requesting media content comprises the call service man-machine interaction environment indication information.

27. The method according to claim 26, wherein the receiving to-be-delivered media content sent by the media delivery server comprises:
receiving a response message of the request message sent by the media delivery server, wherein the response message comprises the to-be-delivered media content.

28. The method according to any one of claims 22 to 27, wherein the determining not to present media content comprises:
receiving first indication information sent by the media delivery server, wherein the first indication information indicates not to deliver media content to the user equipment during the call service execution period, and determining, based on the first indication information, not to present media content; or
determining not to present media content if indication information that is about presentation of media content and that is sent by the media delivery server is not received within a preset time range.

29. The method according to claim 28, wherein if the call service man-machine interaction environment indication information is comprised in the request message for requesting media content, the receiving first indication information sent by the media delivery server comprises:
receiving the response message of the request message sent by the media delivery server, wherein the response message comprises the first indication information.

30. A media delivery server, wherein: the media delivery server comprises a transceiver module and a processing module;
the transceiver module is configured to receive call service man-machine interaction environment indication information sent by user equipment, wherein the call service man-machine interaction environment indication information indicates a man-machine interaction environment of a user corresponding to the user equipment during a call service execution period; and
the processing module is configured to determine to-be-delivered media content based on the call service man-machine interaction environment indication information, and the transceiver module is further configured to deliver the to-be-delivered media content to the user equipment during the call service execution period; or the processing module is configured to determine, based on the call service man-machine interaction environment indication information, not to deliver media content to the user equipment during the call service execution period.

31. The media delivery server according to claim 30, wherein the man-machine interaction environment comprises any one or any combination of the following:
whether a screen of the user equipment is lit;
whether an interface of a call program of the user equipment is visible;
whether a hands-free function of the user equipment is enabled;
whether a wired headset of the user equipment is inserted;
whether a wireless headset of the user equipment is connected; or
whether the user is within a visible range of the user equipment.

32. The media delivery server according to claim 30, wherein
the processing module is specifically configured to determine a media form based on the call service man-machine interaction environment indication information, wherein the media form comprises an audio form, a silent video form, an audible video form, or a low-volume video form, and a default volume of media content in the low-volume video form is greater than 0 and less than a preset threshold; and
the processing module is further specifically configured to determine media content conforming to the media form as the to-be-delivered media content.

33. The media delivery server according to claim 32, wherein
the processing module is specifically configured to: if any one of the following holds true, determine that the media form is the audio form:
the call service man-machine interaction environment indication information indicates that a screen of the user equipment is off; or
the call service man-machine interaction environment indication information indicates that a screen of the user equipment is lit and an interface of a call program of the user equipment is invisible; or
the call service man-machine interaction environment indication information indicates that a screen of the user equipment is lit, a wired headset of the user equipment is inserted, and the user is out of a visible range of the user equipment; or
the call service man-machine interaction environment indication information indicates that a screen of the user equipment is lit, a wireless headset of the user equipment is connected, and the user is out of a visible range of the user equipment.

34. The media delivery server according to claim 32, wherein
the processing module is specifically configured to: if any one of the following holds true, determine that the media form is the audible video form:
the call service man-machine interaction environment indication information indicates that a screen of the user equipment is lit, an interface of a call program of the user equipment is visible, and a wired headset of the user equipment is inserted; or
the call service man-machine interaction environment indication information indicates that a screen of the user equipment is lit, an interface of a call program of the user equipment is visible, and a wireless headset of the user equipment is connected; or
the call service man-machine interaction environment indication information indicates that a screen of the user equipment is lit, an interface of a call program of the user equipment is visible, a wireless headset of the user equipment is connected, and the user is within a visible range of the user equipment; or
the call service man-machine interaction environment indication information indicates that a screen of the user equipment is lit, an interface of a call program of the user equipment is visible, a wired headset of the user equipment is inserted, and the user is within a visible range of the user equipment.

35. The media delivery server according to claim 32, wherein
the processing module is specifically configured to: if the call service man-machine interaction environment indication information indicates that a screen of the user equipment is lit, an interface of a call program of the user equipment is visible, and a hands-free function of the user equipment is enabled, determine that the media form is the silent video form.

36. The media delivery server according to claim 32, wherein
the processing module is specifically configured to: if any one of the following holds true, determine that the media form is the low-volume video form:
the call service man-machine interaction environment indication information indicates that a wired headset of the user equipment is inserted; or
the call service man-machine interaction environment indication information indicates that a wireless headset of the user equipment is connected; or
the call service man-machine interaction environment indication information indicates that a screen of the user equipment is lit, an interface of a call program of the user equipment is visible, a hands-free function of the user equipment is disabled, a wired headset of the user equipment is not inserted, a wireless headset of the user equipment is not connected, and the user is within a visible range of the user equipment.

37. The media delivery server according to claim 31, wherein
the processing module is specifically configured to: if any one of the following holds true, determine that the to-be-delivered media content is media content transmitted by using a voice:
the call service man-machine interaction environment indication information indicates that the screen of the user equipment is off; or
the call service man-machine interaction environment indication information indicates that the screen of the user equipment is lit and the interface of the call program of the user equipment is invisible; or
the call service man-machine interaction environment indication information indicates that the screen of the user equipment is lit, the wired headset of the user equipment is inserted, and the user is out of the visible range of the user equipment; or
the call service man-machine interaction environment indication information indicates that the screen of the user equipment is lit, the wireless headset of the user equipment is connected, and the user is out of the visible range of the user equipment.

38. The media delivery server according to claim 31, wherein
the processing module is specifically configured to: if any one of the following holds true, determine that the to-be-delivered media content is media content transmitted by using an image:
the call service man-machine interaction environment indication information indicates that the screen of the user equipment is lit, the interface of the call program of the user equipment is visible, and the hands-free function of the user equipment is disabled; or
the call service man-machine interaction environment indication information indicates that the screen of the user equipment is lit, the interface of the call program of the user equipment is visible, and the hands-free function of the user equipment is enabled.

39. The media delivery server according to claim 30 or 31, wherein
the processing module is specifically configured to determine a group type of the user based on the call service man-machine interaction environment indication information; and
the processing module is further specifically configured to determine the to-be-delivered media content based on the group type.

40. The media delivery server according to claim 31, wherein
the processing module is specifically configured to: if any one of the following holds true, determine not to deliver media content to the user equipment during the call service execution period:
the call service man-machine interaction environment indication information indicates that the screen of the user equipment is off; or
the call service man-machine interaction environment indication information indicates that the screen of the user equipment is lit and the interface of the call program of the user equipment is invisible; or
the call service man-machine interaction environment indication information indicates that the screen of the user equipment is lit, the wired headset of the user equipment is inserted, and the user is out of the visible range of the user equipment; or
the call service man-machine interaction environment indication information indicates that the screen of the user equipment is lit, the wireless headset of the user equipment is connected, and the user is out of the visible range of the user equipment.

41. The media delivery server according to any one of claims 30 to 40, wherein
the transceiver module is specifically configured to receive a session initiation protocol information reporting SIP-info message sent by the user equipment, wherein the SIP-info message comprises the call service man-machine interaction environment indication information.

42. The media delivery server according to any one of claims 30 to 40, wherein
the transceiver module is specifically configured to receive a session initiation protocol notification SIP-Notification message sent by the user equipment, wherein the SIP-Notification message comprises the call service man-machine interaction environment indication information; and
the transceiver module is further configured to send a subscription message to the user equipment, wherein the subscription message is used to subscribe to the call service man-machine interaction environment indication information.

43. The media delivery server according to any one of claims 30 to 40, wherein
the transceiver module is specifically configured to receive a request message for requesting media content sent by the user equipment, wherein the request message for requesting media content comprises the call service man-machine interaction environment indication information.

44. The media delivery server according to claim 43, wherein
the transceiver module is specifically configured to send a response message of the request message to the user equipment during the call service execution period, wherein the response message comprises the to-be-delivered media content.

45. A user equipment, wherein the user equipment comprises a processing module and a transceiver module;
the processing module is configured to obtain call service man-machine interaction environment indication information, wherein the call service man-machine interaction environment indication information indicates a man-machine interaction environment of a user corresponding to the user equipment during a call service execution period;
the transceiver module is configured to send the call service man-machine interaction environment indication information to a media delivery server; and
the transceiver module is further configured to receive to-be-delivered media content sent by the media delivery server, and the processing module is further configured to present the to-be-delivered media content by using a call program-related program unit; or the processing module is further configured to determine not to present media content.

46. The user equipment according to claim 45, wherein the processing module is specifically configured to:
detect whether a screen of the user equipment is lit;
detect whether an interface of a call program of the user equipment is visible;
detect whether a hands-free function of the user equipment is enabled;
detect whether a wired headset of the user equipment is inserted;
detect whether a wireless headset of the user equipment is connected; or
detect whether the user is within a visible range of the user equipment.

47. The user equipment according to claim 45 or 46, wherein
the transceiver module is specifically configured to send a session initiation protocol information reporting SIP-info message to the media delivery server, wherein the SIP-info message comprises the call service man-machine interaction environment indication information.

48. The user equipment according to claim 45 or 46, wherein
the transceiver module is specifically configured to send a session initiation protocol notification SIP-Notification message to the media delivery server, wherein the SIP-Notification message comprises the call service man-machine interaction environment indication information; and
the transceiver module is further configured to receive a subscription message from the media delivery server, wherein the subscription message is used to subscribe to the call service man-machine interaction environment indication information.

49. The user equipment according to claim 45 or 46, wherein
the transceiver module is specifically configured to send a request message for requesting media content to the media delivery server, wherein the request message for requesting media content comprises the call service man-machine interaction environment indication information.

50. The user equipment according to claim 49, wherein
the transceiver module is specifically configured to receive a response message of the request message sent by the media delivery server, wherein the response message comprises the to-be-delivered media content.

51. The user equipment according to any one of claims 45 to 50, wherein
the processing module is specifically configured to receive, by using the transceiver module, first indication information sent by the media delivery server, wherein the first indication information indicates not to deliver media content to the user equipment during the call service execution period, and the processing module is further specifically configured to determine, based on the first indication information, not to present media content; or
the processing module is specifically configured to determine not to present media content if indication information that is about presentation of media content and that is sent by the media delivery server is not received within a preset time range.

52. A media delivery server comprising a processor, wherein the processor is coupled to a memory, the memory is configured to store a program or instructions, and when the program or the instructions are executed by the processor, the media delivery server is enabled to perform the method according to any one of claims 1 to 21.

53. User equipment, comprising a processor, wherein the processor is coupled to a memory, the memory is configured to store a program or instructions, and when the program or the instructions are executed by the processor, the user equipment is enabled to perform the method according to any one of claims 22 to 29.

54. A communication system, comprising a media delivery server and user equipment, wherein the media delivery server is configured to perform the method according to any one of claims 1 to 21, and the user equipment is configured to perform the method according to any one of claims 22 to 29.
